# EUROPEAN PATENT APPLICATION

(11) **EP 4 817 715 A1**
(43) Date of publication of application: **07.10.2026**
(21) Application number: 24926257.7
(22) Date of filing: 01.08.2024
(51) Int. Cl.: A63F 13/98, A63F 13/24, A63F 13/245

(54) **DEVICE**

(71) Applicant: Nintendo Co., Ltd., Kyoto-shi, Kyoto 601-8501 (JP)
(72) Inventor: NONAKA, Ryo, Kyoto-shi, Kyoto 601-8501 (JP); KITANO, Yasuhisa, Kyoto-shi, Kyoto 601-8501 (JP); TAMURA, Yoshitaka, Kyoto-shi, Kyoto 601-8501 (JP)
(74) Representative: Bardehle Pagenberg Partnerschaft mbB Patentanwälte Rechtsanwälte
(86) International application number: PCT/JP2024/027581
(87) International publication number: WO 2026/028404

(57) **Abstract**

An apparatus is an apparatus to which a controller is removably attachable, the controller including an attachment portion and a button, the attachment portion projecting from a side surface and being configured to be attached to a game device, the button being located at the attachment portion. The apparatus includes an accommodation portion, a flange, a user-operable portion, and a pusher. The controller is to be accommodated in the accommodation portion. The accommodation portion is defined by an inner surface including at least an upper surface that faces downward, a lower surface that faces upward, and a bottom surface that faces forward, and the accommodation portion is open forward. The flange includes a flange inner surface that extends downward from the upper surface and is opposed to the bottom surface, and the flange is configured to cover at least a part of a front surface of the attachment portion of the controller accommodated in the accommodation portion. The user-operable portion is configured to be operated by a user. The pusher is configured to project downward from the upper surface as the user-operable portion is operated, and to press down the button of the controller accommodated in the accommodation portion.

## Description

### TECHNICAL FIELD

The present disclosure relates to an apparatus.

### BACKGROUND ART

Japanese Patent Laying-Open No. 2018-110680 (PTL 1) discloses an accessory apparatus to be used together with a game controller.

### CITATION LIST

### PATENT LITERATURE

PTL 1: Japanese Patent Laying-Open No. 2018-110680

### SUMMARY OF INVENTION

### TECHNICAL PROBLEM

An object of the present disclosure is to improve operability.

### SOLUTION TO PROBLEM

An apparatus in the present disclosure is an apparatus to which a controller is removably attachable, the controller including an attachment portion and a button, the attachment portion projecting from a side surface and configured to be attached to a game device, the button being located at the attachment portion. The apparatus includes an accommodation portion, a flange, a user-operable portion, and a pusher. The accommodation portion is configured to accommodate the controller. The accommodation portion is defined by an inner surface including at least an upper surface that faces downward, a lower surface that faces upward, and a bottom surface that faces forward, and is open forward. The flange includes a flange inner surface that extends downward from the upper surface and is opposed to the bottom surface, and is configured to cover at least a part of a front surface of the attachment portion of the controller accommodated in the accommodation portion. The user-operable portion is configured to be operated by a user. The pusher is configured to project downward from the upper surface as the user-operable portion is operated and to press down the button of the controller accommodated in the accommodation portion.

The apparatus above may include a magnetic member configured to be attracted to the button by magnetic force.

In the apparatus above, the magnetic member may be located at a position above the button of the controller accommodated in the accommodation portion.

In the apparatus above, the pusher may include the magnetic member.

In the apparatus above, in a left-right direction, the magnetic member may be located at at least one side relative to a center of the button of the controller attached to the apparatus. The pusher may be configured to press down the other side relative to the center of the button.

In the apparatus above, the pusher may include the magnetic member. The pusher may be configured to rotate around an axis provided at the one side in the left-right direction relative to the magnetic member.

In the apparatus above, in the left-right direction, the magnetic member may be located from the one side to the other side relative to the center of the button.

In the apparatus above, in the left-right direction, the magnetic member may be located immovably with respect to the accommodation portion at the at least one side relative to the center of the button of the controller attached to the apparatus, and does not have to be located at the other side.

In the apparatus above, at the bottom surface, a first elastically deformable body may be located.

In the apparatus above, the first elastically deformable body may be located below a center in an upward-downward direction, at the bottom surface exposed when the apparatus is viewed from a front side.

In the apparatus above, at the lower surface, a second elastically deformable body may be located. At the upper surface, no elastically deformable body may be located.

In the apparatus above, a length of the flange in a left-right direction may be shorter than a length of a facing-forward opening of the accommodation portion in the left-right direction.

In the apparatus above, a length of the flange in a left-right direction may be longer than a length of the attachment portion in the left-right direction and shorter than a length of the controller in the left-right direction.

The apparatus above may include a rim. The accommodation portion may be located at an inner diameter side of the rim. The user-operable portion may be located at a rear of the rim.

The apparatus above may be in a shape of a steering wheel and include a front-side housing and a rear-side housing fixed at a rear of the front-side housing. The front-side housing and the rear-side housing may form a rim. The apparatus may include a rim cover configured to cover the rim so as to cover an outer peripheral edge of the rim except for an upper end area.

In the apparatus above, an area of the bottom surface opposed to the flange inner surface may be in a shape curved convexly upward and rearward.

In the apparatus above, a distance between an area of the bottom surface opposed to the flange inner surface and the attachment portion may increase toward below.

In the apparatus above, a distance between a lower end of an area of the bottom surface opposed to the flange inner surface and the attachment portion may be longer than a distance between a lower end of the flange inner surface and the attachment portion.

In the apparatus above, the flange may include an inlet and an outlet, the inlet being located at the flange inner surface, the inlet being configured such that light emitted from the attachment portion is incident through the inlet, the outlet being located at a flange outer surface, the outlet being configured such that light incident through the inlet goes out through the outlet. The outlet may be located above the inlet.

An apparatus in the present disclosure is an apparatus configured to be held by a user, and includes an attachment portion, a first movable portion, and a second movable portion. To the attachment portion, a controller including a first button is removably attachable. The first movable portion includes a first surface and a first pushing portion, the first surface extending in a left-right direction, the first surface being configured to be pushed by the user from above. The first movable portion is configured to rotate around a first axis as the first surface is pushed, the first axis extending in a first direction including a left-right-direction component. The second movable portion includes a second surface and a second pushing portion, the second surface being configured to be pushed by the first pushing portion as the first movable portion rotates. The second movable portion is configured to rotate around a second axis as the second surface is pushed, the second axis extending in a second direction closer to a front-rear direction than the first direction. The second pushing portion is configured to push the first button of the controller attached to the attachment portion as the second movable portion rotates.

In the apparatus above, the first surface may be located at a rear of the first axis.

In the apparatus above, a rear end of the second movable portion may be located at a front side relative to a rear end of the first movable portion.

In the apparatus above, in the front-rear direction, the first pushing portion may be located between the first axis and the first surface.

In the apparatus above, the first axis may be located in front of a center in the front-rear direction of the second movable portion.

In the apparatus above, at the second movable portion, a magnet configured to be attracted to the first button by magnetic force may be located.

The apparatus above may be configured to be held with both hands of the user. The controller may include a second button. The apparatus may include a third movable portion and a fourth movable portion. The third movable portion may include a third surface and a third pushing portion, the third surface extending in the left-right direction, the third surface being configured to be pushed by the user from above. The third movable portion may be configured to rotate around a third axis as the third surface is pushed, the third axis extending in a third direction including a left-right-direction component. The fourth movable portion may include a fourth surface and a fourth pushing portion, the fourth surface being configured to be pushed by the third pushing portion as the third movable portion rotates. The fourth movable portion may be configured to rotate around a fourth axis as the fourth surface is pushed, the fourth axis extending in a fourth direction closer to the front-rear direction than the third direction. The fourth pushing portion may be configured to push the second button of the controller attached to the attachment portion as the fourth movable portion rotates. The first surface may be located at a position where the first surface is covered from a right side by a right forefinger, a right middle finger, or a right ring finger of the user. The third surface may be located at a position where the third surface is covered from a left side by a left forefinger, a left middle finger, or a left ring finger of the user.

In the apparatus above, a right end of the first axis may be located at the left side relative to a right end of the first surface. A left end of the third axis may be located at the right side relative to a left end of the third surface.

The apparatus above may include a rim configured to be held with both hands of the user. Each of the first surface and the third surface may be located at the rear of the rim.

In the apparatus above, when viewed in an upward-downward direction, the first direction and the second direction may be orthogonal to each other and the third direction and the fourth direction may be orthogonal to each other.

The apparatus above may include a housing where the first movable portion is to be accommodated such that the first surface is exposed and a cushion located between an inner surface of the housing and an upper surface of the first movable portion.

### BRIEF DESCRIPTION OF DRAWINGS

Fig. 1 is a first schematic perspective view showing a configuration of an apparatus according to the present embodiment.
Fig. 2 is a second schematic perspective view showing the configuration of the apparatus according to the present embodiment.
Fig. 3 is a schematic front view showing a configuration of an exemplary information device apparatus.
Fig. 4 is a schematic front view showing a state with each of a first controller and a second controller having been removed from a game device.
Fig. 5 is a diagram showing an exemplary state in which an information processing apparatus is operated as being held.
Fig. 6 is a diagram showing an exemplary state in which a controller is operated as being horizontally held.
Fig. 7 is a diagram showing an exemplary state in which the controller is operated as being vertically held.
Fig. 8 is an assembly schematic perspective view showing a configuration of a right side surface of the game device.
Fig. 9 is an exploded schematic perspective view showing the configuration of the right side surface of the game device.
Fig. 10 is a schematic six-view drawing showing a configuration of the first controller.
Fig. 11 is a schematic perspective view showing the configuration of the first controller.
Fig. 12 is an exploded schematic perspective view including a projection.
Fig. 13 is a partial schematic cross-sectional view along the line XIII-XIII in Fig. 11.
Fig. 14 is a schematic cross-sectional view showing a state in which a first button has been attracted to a first game-device-side magnetic element.
Fig. 15 is a schematic cross-sectional view showing a state in which the controller has been mounted to the game device.
Fig. 16 is a schematic six-view drawing showing a configuration of the second controller.
Fig. 17 is a schematic six-view drawing showing a configuration of the apparatus according to a first embodiment.
Fig. 18 is a schematic six-view drawing showing a state in which the first controller has been attached to the apparatus.
Fig. 19 is a schematic perspective view showing a state in which a user is holding the apparatus.
Fig. 20 is a first exploded schematic perspective view showing a configuration of a part of the apparatus according to the first embodiment.
Fig. 21 is a second exploded schematic perspective view showing a configuration of a part of the apparatus according to the first embodiment.
Fig. 22 is a third exploded schematic perspective view showing a configuration of a part of the apparatus according to the first embodiment.
Fig. 23 is a fourth exploded schematic perspective view showing the configuration of the apparatus according to the first embodiment.
Fig. 24 is a schematic perspective view showing the configuration of the apparatus according to the first embodiment.
Fig. 25 is a schematic front view showing the configuration of the apparatus according to the first embodiment.
Fig. 26 is a schematic cross-sectional view along the line XXVI-XXVI in Fig. 25.
Fig. 27 is a schematic cross-sectional view along the line XXVII-XXVII in Fig. 25.
Fig. 28 is a schematic cross-sectional view showing a state in which the first controller is being attached to the apparatus.
Fig. 29 is a schematic cross-sectional view showing a state in which the first controller has been attached to the apparatus.
Fig. 30 is a schematic front view showing the state in which the first controller has been attached to the apparatus.
Fig. 31 is a schematic cross-sectional view showing a state in which the first controller has been attached to the apparatus according to the first embodiment.
Fig. 32 is a schematic perspective view showing a configuration of a part of the apparatus according to the first embodiment.
Fig. 33 is a first schematic cross-sectional view showing the configuration of the apparatus while a first surface is not pushed.
Fig. 34 is a second schematic cross-sectional view showing the configuration of the apparatus while the first surface is not pushed.
Fig. 35 is a first schematic cross-sectional view showing the configuration of the apparatus while the first surface has been pushed.
Fig. 36 is a second schematic cross-sectional view showing the configuration of the apparatus while the first surface has been pushed.
Fig. 37 is a schematic front view showing a state in which the second controller has been attached to the apparatus.
Fig. 38 is a partial schematic perspective view showing a state in which the second controller has been attached to an apparatus according to a second embodiment.
Fig. 39 is a schematic front view showing a state in which the second controller has been attached to an apparatus according to a third embodiment.

### DESCRIPTION OF EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### <Overview>

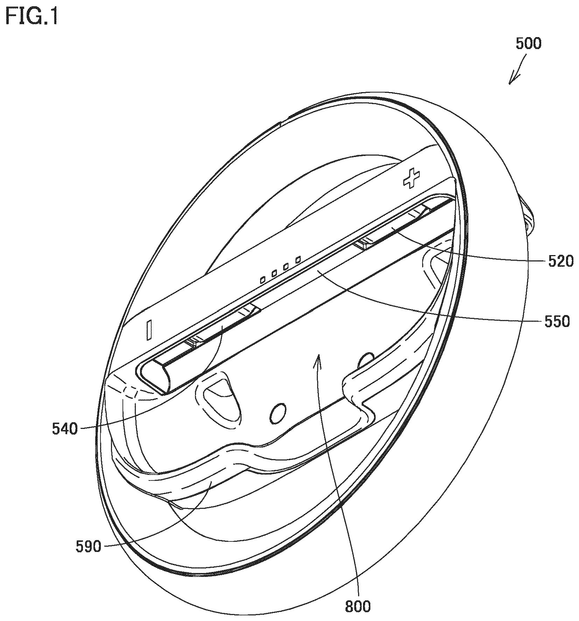

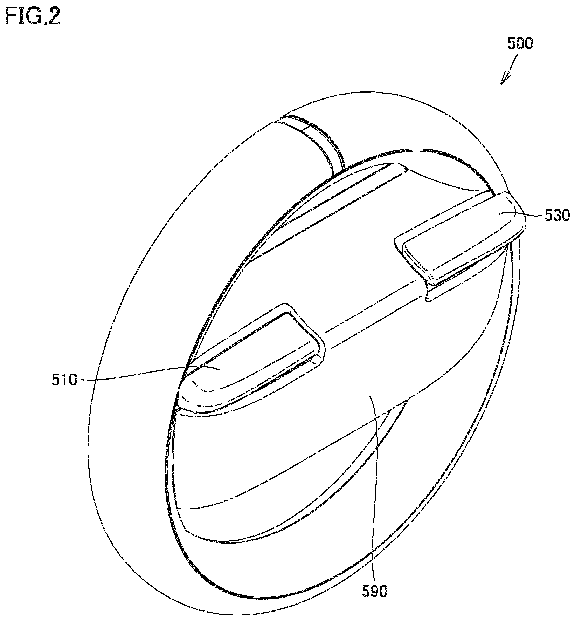

Overview of an exemplary apparatus according to the present disclosure will initially be described. Fig. 1 is a first schematic perspective view showing a configuration of an apparatus according to the present embodiment. Fig. 2 is a second schematic perspective view showing the configuration of the apparatus according to the present embodiment.

As shown in Figs. 1 and 2, an apparatus 500 according to the present embodiment includes a first movable portion 510, a second movable portion 520, a third movable portion 530, a fourth movable portion 540, and a housing 590. Second movable portion 520 and fourth movable portion 540 are exemplary pushers configured to project downward as first movable portion 510 and third movable portion 530 are operated, respectively. Housing 590 is provided with an accommodation portion 800. A controller is to be accommodated in accommodation portion 800.

### <Information Device Apparatus>

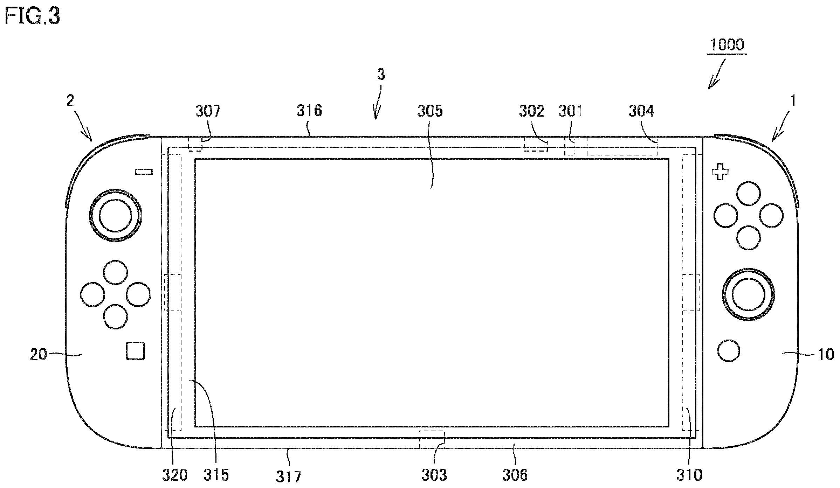

A configuration of an exemplary information device apparatus including a first controller and a second controller will now be described. Fig. 3 is a schematic front view showing the configuration of the exemplary information device apparatus.

As shown in Fig. 3, an information device apparatus 1000 includes a first controller 1, a second controller 2, and a game device 3. First controller 1 or second controller 2 will collectively also simply be referred to as a controller below. Each of first controller 1 and second controller 2 is, for example, a game controller. Game device 3 is configured to perform game processing. The game processing is performed based on an input to the controller. First controller 1 and second controller 2 are attachable to and removable from game device 3. In an attached state shown in Fig. 3, first controller 1 is attached to a right side surface of game device 3 and second controller 2 is attached to a left side surface of game device 3.

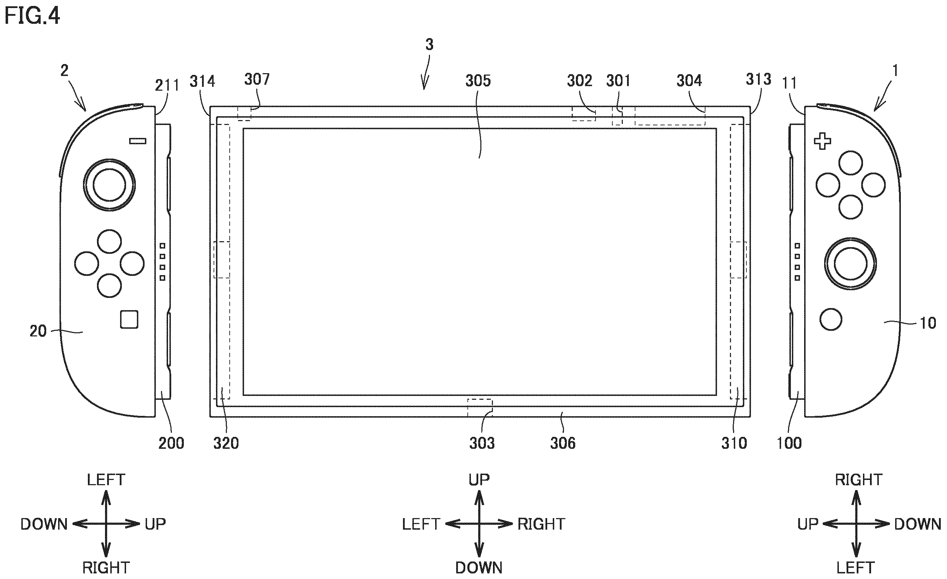

Fig. 4 is a schematic front view showing a state with each of first controller 1 and second controller 2 having been removed from game device 3.

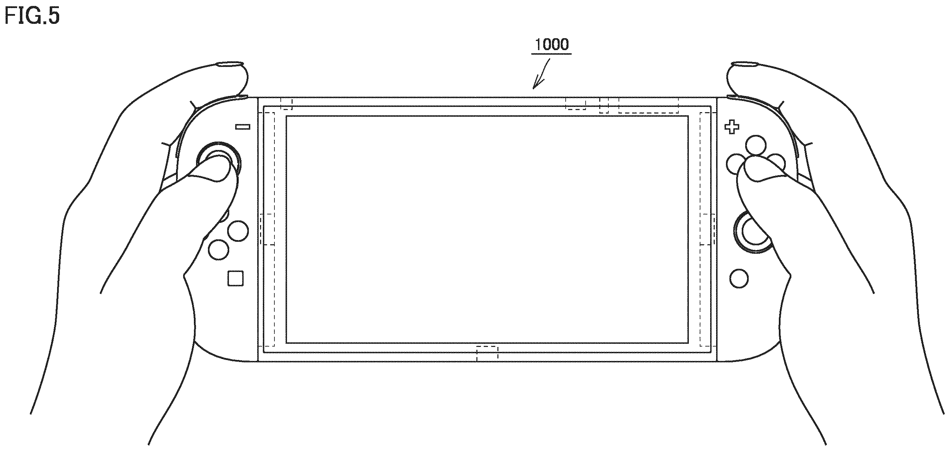

As shown in Figs. 5, 6, and 7, the controller can be used in each of a state in which the controller is attached to game device 3 and a state in which the controller is not attached to game device 3.

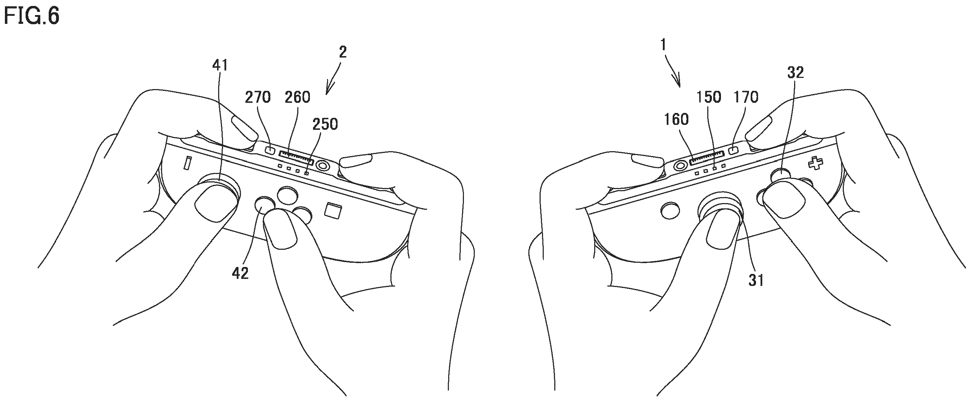

As shown in Fig. 5, while the controller is attached to game device 3, the controller is used in such a manner that a longitudinal direction thereof extends, for example, in an upward-downward direction. As shown in Fig. 6, on the other hand, while the controller is not attached to game device 3, the controller is used in such a manner that the longitudinal direction thereof extends in a left-right direction (from another point of view, a direction in parallel to the ground).

In the example shown in Fig. 6, different users operate first controller 1 and second controller 2, respectively.

When directions of the controller (upward-downward and left-right directions) are mentioned in the description hereafter, description will be given, with a state of use in which the controller is not attached to game device 3 and the longitudinal direction extends in the left-right direction being defined as the reference. When directions of game device 3 and directions of information device apparatus 1000 in which the controller is attached to game device 3 are mentioned in the description hereafter, on the other hand, description will be given, with a state of use in which a direction of connection between side surfaces of game device 3 to which the controllers are attached extends in the left-right direction being defined as the reference.

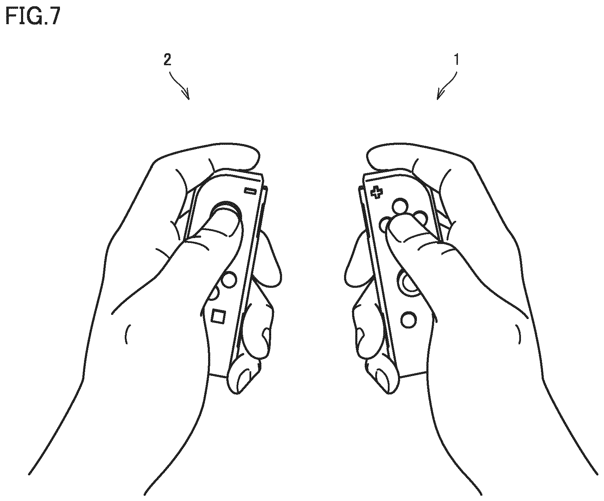

As shown in Fig. 7, while the controller is not attached to game device 3, the controller is used also in such a manner that the longitudinal direction thereof extends, for example, in the upward-downward direction (from another point of view, a direction perpendicular to the ground) or a front-rear direction. In the example shown in Fig. 7, a single user operates both of first controller 1 and second controller 2. Different users may operate respective controllers.

In the following, the state of use shown in Fig. 5 is also called an integrally held state, the state of use shown in Fig. 6 is also called a horizontally held state, and the state of use shown in Fig. 7 is also called a vertically held state.

As shown in Fig. 4, first controller 1 includes at an upper side surface 11, a projection 100 that projects from that side surface. Upper side surface 11 of first controller 1 is a side surface that extends along the longitudinal direction of first controller 1. Projection 100 extends in the longitudinal direction of upper side surface 11. Projection 100 is mounted to a controller housing 10. Similarly, second controller 2 includes at an upper side surface 211, a projection 200 that projects from that side surface and extends in the longitudinal direction of the side surface. Upper side surface 211 of second controller 2 is a side surface that extends along the longitudinal direction of second controller 2. Projection 200 extends in the longitudinal direction of upper side surface 211. Projection 200 is attached to a controller housing 20.

As shown in Figs. 3 and 4, game device 3 is provided with a game-device-side recess 310 in a main body right side surface 313. Game-device-side recess 310 extends in the longitudinal direction of main body right side surface 313. Game-device-side recess 310 extends along the upward-downward direction of main body right side surface 313. A main body left side surface 314 of game device 3 is provided with a game-device-side recess 320. Game-device-side recess 320 extends in the longitudinal direction of main body left side surface 314. Game-device-side recess 320 extends along the upward-downward direction of main body left side surface 314 of game device 3. Game-device-side recess 310, 320 is a recess in an elongated shape that extends along the longitudinal direction of main body right side surface 313 or main body left side surface 314.

Game-device-side recesses 310 and 320 are each a game device attachment portion located in game device 3 of the information device apparatus. As shown in Fig. 3, first controller 1 is mounted to game device 3 such that projection 100 is matched with game-device-side recess 310. First controller 1 is mounted to game device 3 such that upper side surface 11 of first controller 1 is opposed to main body right side surface 313 of game device 3 and the longitudinal direction of upper side surface 11 of first controller 1 extends along the longitudinal direction of main body right side surface 313 of game device 3. Similarly, second controller 2 is mounted to game device 3 such that projection 200 is matched with game-device-side recess 320. Second controller 2 is mounted to game device 3 such that upper side surface 211 of second controller 2 is opposed to main body left side surface 314 of game device 3 and the longitudinal direction of upper side surface 211 of second controller 2 extends along the longitudinal direction of main body left side surface 314 of game device 3.

Though first controller 1 and second controller 2 each include a joystick and one set of four buttons, when the first controller is mounted to game device 3, first controller 1 is mounted in such a manner that the four buttons are located above and the joystick is located below. Second controller 2, on the other hand, is mounted to game device 3 in such a manner that the joystick is located above and the four buttons are located below.

The information device apparatus may be configured to perform a function other than a game. The information device apparatus may include a casing where a device configured to execute a game can be accommodated. First controller 1 and second controller 2 may be attached to a component other than game device 3 of the information device apparatus. For example, first controller 1 and second controller 2 may be attachable to each other.

### <Game Device>

As shown in Fig. 3, a display 305 is located at a main body front surface 315 of game device 3.

Game device 3 includes a lower terminal 303. Game device 3 may output an image to the outside through lower terminal 303. When game device 3 is placed on a cradle from a side of the main body lower side surface, lower terminal 303 may be connected to a terminal of the cradle.

Game device 3 includes an upper terminal 302 at a main body upper side surface 316. Game device 3 may include a power button 307, a storage medium slot 304, or an audio input and output terminal 301 at main body upper side surface 316. Game device 3 may perform game processing by executing a game application stored in a storage medium inserted in storage medium slot 304.

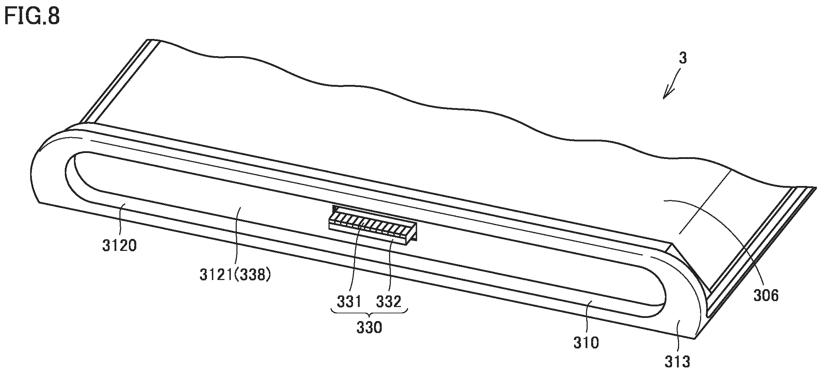

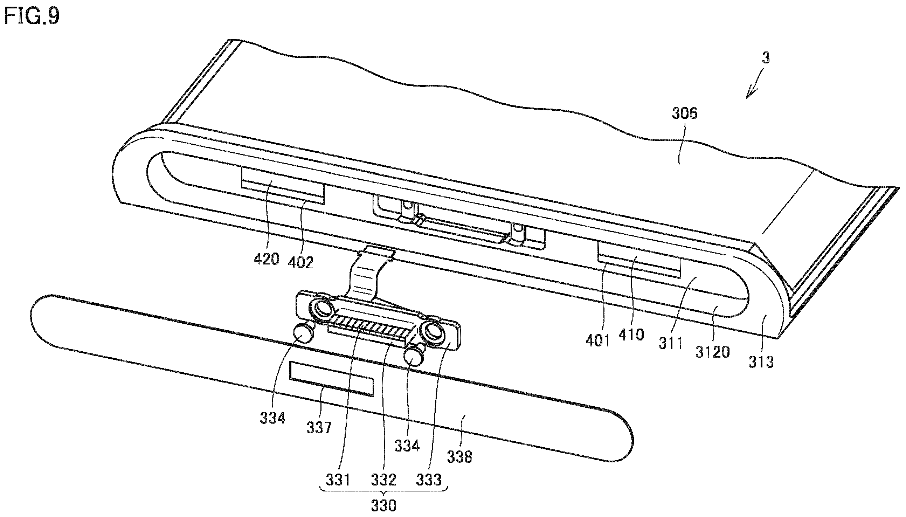

Fig. 8 is an assembly schematic perspective view showing a configuration of the right side surface of game device 3. Fig. 9 is an exploded schematic perspective view showing the configuration of the right side surface of game device 3.

As shown in Fig. 8, main body right side surface 313 of game device 3 is provided with game-device-side recess 310. Game-device-side recess 310 is a portion recessed in main body right side surface 313. Game-device-side recess 310 is provided with a game-device-side bottom surface 3121 and a game-device-side inner peripheral surface 3120 that surrounds game-device-side bottom surface 3121. In the present example, a portion of a main body housing 306 that forms the right side surface of game device 3 is recessed to form game-device-side inner peripheral surface 3120 and a base surface (a base surface 311 which will be described later) that serves as a base of the bottom surface. As a cover member 338 is placed on the base surface, a surface of cover member 338 defines game-device-side bottom surface 3121 of game-device-side recess 310. Cover member 338 does not have to be provided, and in that case, the bottom surface formed by main body housing 306 defines game-device-side bottom surface 3121 of game-device-side recess 310.

As shown in Fig. 9, game device 3 includes a first plug connector 330, cover member 338, a set of shoulder screws 334, and two game-device-side magnetic elements 410 and 420 located along the longitudinal direction of game-device-side recess 310. Game-device-side first magnetic element 410 is arranged above and game-device-side second magnetic element 420 is arranged below. Game-device-side first magnetic element 410 is arranged in an area above a center in the longitudinal direction of main body right side surface 313 and game-device-side second magnetic element 420 is arranged in an area below the center. Game-device-side magnetic elements 410 and 420 each include a magnet and yokes that sandwich the magnet. Game-device-side magnetic elements 410 and 420 do not have to include the yokes. Game-device-side magnetic elements 410 and 420 may both be arranged in the area above or below.

Base surface 311 is provided with a first hole 401 and a second hole 402 for accommodation of game-device-side magnetic elements 410 and 420. First hole 401 and second hole 402 are aligned in the longitudinal direction of main body right side surface 313. In other words, first hole 401 and second hole 402 are aligned in the longitudinal direction of base surface 311. Though details will be described later, first controller 1 also includes a magnetic element. As magnetic elements on a side of first controller 1 are attracted to game-device-side magnetic elements 410 and 420, the controller is attached to game device 3. As the entirety or a part of game-device-side magnetic elements 410 and 420 enter respective holes 401 and 402 from the inside of main body housing 306, the magnetic elements at the side of first controller 1 attached to game device 3 come closer to game-device-side magnetic elements 410 and 420 and magnetic force for attraction can be strengthened.

Game-device-side second magnetic element 420 is similar in configuration to game-device-side first magnetic element 410. Game-device-side second magnetic element 420 is accommodated in part in second hole 402, similarly to game-device-side first magnetic element 410.

### <Controller>

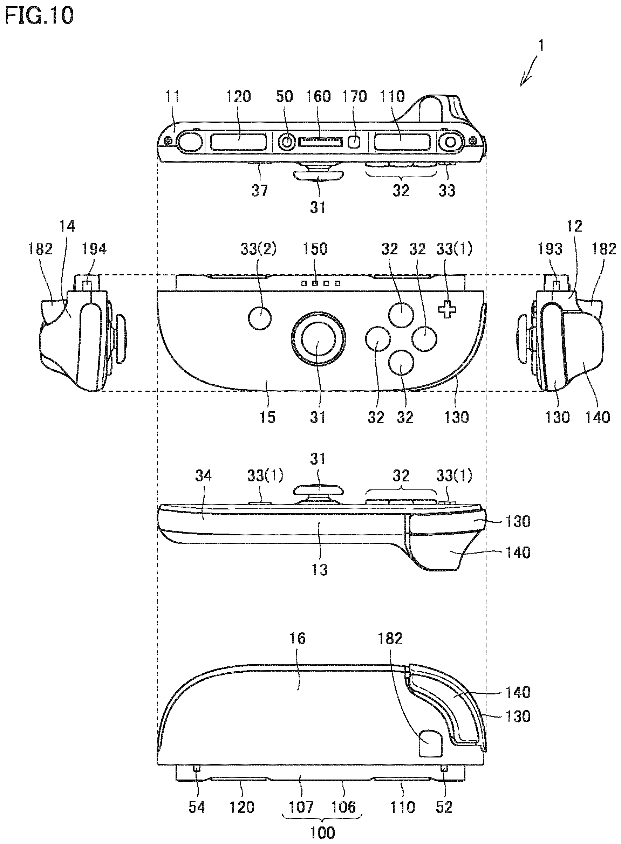

Fig. 10 is a schematic six-view drawing showing a configuration of first controller 1.

As shown in Fig. 10, first controller 1 in the present embodiment includes at a front surface thereof, a joystick 31 which represents an exemplary direction input portion, a set of four buttons 32 aligned in a cross shape, a + button 33(1), and a home button 33(2). First controller 1 includes a first button 110 and a second button 120, a synchronization button 50, a shoulder button (right) 130, and a Z shoulder button (right) 140. Though details will be described later, first button 110, second button 120, and synchronization button 50 are located at projection 100. These are exemplary input portions and all of them do not have to be provided. First controller 1 may include another input portion such as a touch pad or a pressure sensor instead of or in addition to these input portions. Each of first button 110 and second button 120 is an attraction button configured to be attracted by magnetic force.

While first controller 1 is attached to game device 3, operation information from the input portion is transmitted to a main body first terminal 331 of game device 3 through a first terminal 160 which will be described later and processed in accordance with a program by a CPU of game device 3. In a manner of use where the controller is not attached to game device 3, operation information from the input portion is transmitted to the CPU of game device 3 through a wireless chip included in the controller and a wireless chip included in game device 3. The game device does not have to include first terminal 160 and main body first terminal 331, and in that case, information is transmitted through the wireless chips also while the controller is attached to game device 3.

As shown in Fig. 10, first controller 1 includes a front surface 15, a rear surface 16, upper side surface 11, a right side surface 12, a lower side surface 13, and a left side surface 14. Front surface 15 is a surface opposed to a user who uses first controller 1 in the integrally held state, the horizontally held state, and the vertically held state. Rear surface 16 is located opposite to front surface 15. Front surface 15 and rear surface 16 are each contiguous to upper side surface 11, right side surface 12, lower side surface 13, and left side surface 14.

A direction of normal to upper side surface 11 is also referred to as an upward direction R1. Upward direction R1 is a direction in which projection 100 projects and also referred to as above, an upper side, or a projection direction. Projection 100 is located at a side of upward direction R1 of upper side surface 11. A direction opposite to upward direction R1 is also referred to as a downward direction R3. Downward direction R3 is also referred to as below or a lower side. Upward direction R1 and downward direction R3 are also collectively referred to as the upward-downward direction.

A direction toward right side surface 12 which is perpendicular to the upward-downward direction is also referred to as a right direction R2. Right direction R2 is also referred to as rightward or a right side. A direction opposite to right direction R2 is also referred to as a left direction R4. Left direction R4 is also referred to as leftward or a left side. Right direction R2 and left direction R4 are also collectively referred to as the left-right direction.

A direction normal to front surface 15 is also referred to as a forward direction R5. Forward direction R5 is also referred to as a front surface side, a front side, or forward. A direction opposite to the fifth direction is also referred to as a rearward direction R6. Rearward direction R6 is also referred to as a rear surface side, a rear side, or rearward. Forward direction R5 and rearward direction R6 are also collectively referred to as the front-rear direction.

As described above, upper side surface 11 is located at a side of the upward direction with respect to the front surface. Upper side surface 11 is a side surface that extends in the longitudinal direction of front surface 15. In the present embodiment, the longitudinal direction of front surface 15 corresponds to the left-right direction of front surface 15. Upper side surface 11 extends in the left-right direction. Lower side surface 13 is located opposite to upper side surface 11. Lower side surface 13 is located at a side of downward direction R3 of upper side surface 11. Right side surface 12 is a side surface that is contiguous to a right end of upper side surface 11 and extends in a direction away from upper side surface 11. An end of the right side surface distant from upper side surface 11 is contiguous to a right end of lower side surface 13. Left side surface 14 is a side surface that is contiguous to a left end of upper side surface 11 and extends in a direction away from upper side surface 11. An end of the left side surface distant from upper side surface 11 is contiguous to a left end of lower side surface 13. The right side surface is located at a side of right direction R2, of the left side surface.

As shown in Fig. 10, front surface 15 of the first controller is provided with + button 33(1), one set of four buttons 32, joystick 31, and home button 33(2) from the right side in the left-right direction. One set of four buttons 43 and joystick 31 are adjacent to each other. In the upward-downward direction, joystick 31 is located between an upper button and a lower button in one set of four buttons 32 in the upward-downward direction. In the left-right direction, joystick 31 is located substantially on an extension of a straight line that connects the button at the right side and the button at the left side in one set of four buttons 32 to each other.

Joystick 31 is tiltable in directions around 360 degrees and may be tiltable in any direction including upward direction R1 to left direction R4. Joystick 31 may be tiltable only in at least one direction. Joystick 31 may be pushed in. Joystick 31 may be slidable in each direction, instead of being tilted. Game device 3 may perform processing in accordance with a signal indicating an operation direction, in an executed program, as a result of an operation on joystick 31 by the user. The controller may include another input portion instead of or in addition to joystick 31 as the direction input portion. For example, the controller may include a cross-shaped key or one set of buttons.

Game device 3 may perform predetermined corresponding processing based on pressing down of + button 33(1) and one set of four buttons 32 in an executed program. Game device 3 may call a home menu in response to an input on home button 33(2).

Shoulder button (right) 130 is, for example, a button to be used in the integrally held state, and arranged at an upper right portion of first controller 1 in the integrally held state. Shoulder button (right) 130 may be used in the vertically held state. Shoulder button (right) 130 includes a curved operation surface. Shoulder button (right) 130 extends in a direction away from upper side surface 11. Shoulder button (right) 130 is generally located at a lower right portion of first controller 1 in the horizontally held state. At least a part of shoulder button (right) 130 may be located at right side surface 12. The operation surface of shoulder button (right) 130 is generally curved along the lower right portion of first controller 1. Game device 3 performs predetermined processing in accordance with pressing down of the shoulder button (right) in an executed program.

Z shoulder button (right) 140 is, for example, a button to be used in the integrally held state, and located at a rear surface side of shoulder button (right) 130. Z shoulder button (right) 140 may be used also in the vertically held state. Z shoulder button (right) 140 includes a curved operation surface. Shoulder button (right) 130 extends in a direction away from upper side surface 11. Z shoulder button (right) 140 is generally located at the lower right portion of first controller 1 in the horizontally held state. At least a part of Z shoulder button (right) 140 may be located at right side surface 12. At least a part of Z shoulder button (right) 140 may be located at rear surface 16. The operation surface of Z shoulder button (right) 140 is curved generally along the lower right portion of first controller 1. Z shoulder button (right) 140 may entirely be located at the rear surface. Game device 3 performs predetermined processing based on pressing down of Z shoulder button (right) 140 in an executed program.

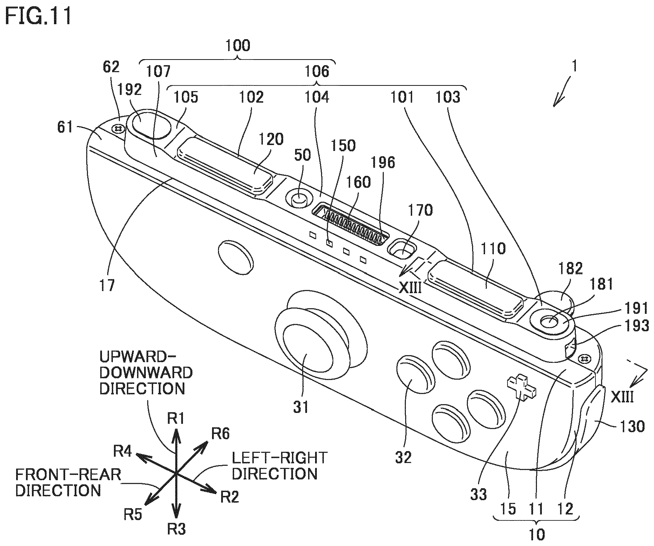

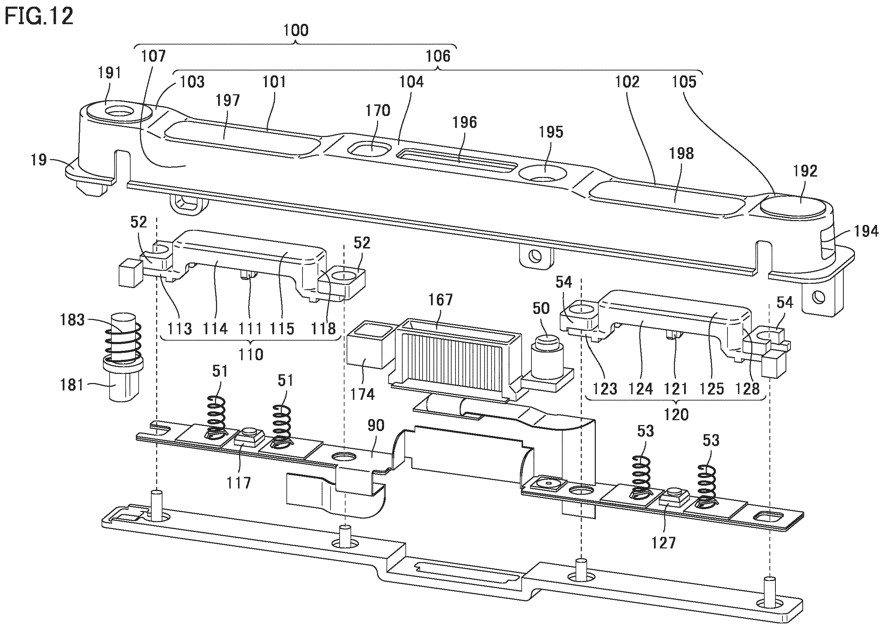

Fig. 11 is a schematic perspective view showing a configuration of first controller 1. Fig. 12 is an exploded schematic perspective view including projection 100.

As shown in Fig. 11, first controller 1 includes, in addition to already-described features, a light emission portion 150 that gives a notification of an identification number of the controller, first terminal 160 connected to main body first terminal 331 of game device 3, a first cushion 191, a second cushion 192, and an operation lever 182 for removal of projection 100 from game device 3. As operation lever 182 is operated, a pushing member 181 projects. First terminal 160 is a controller terminal located at first controller 1.

As shown in Fig. 11, projection 100 projects upward from upper side surface 11. From another point of view, projection 100 projects in upward direction R1 from upper side surface 11. Projection 100 extends along the longitudinal direction of upper side surface 11 (that is, a length in the longitudinal direction is longer than lengths in other directions). Projection 100 does not have to extend in a manner as exactly coinciding with the longitudinal direction of upper side surface 11 but should only extend along the longitudinal direction. In other words, the longitudinal direction of projection 100 extends along the longitudinal direction of upper side surface 11. The longitudinal direction of projection 100 does not have to exactly coincide with the longitudinal direction of upper side surface 11. Projection 100 is a projection in an elongated shape that extends along the longitudinal direction of upper side surface 11. Projection 200 of second controller 2 is also similar in configuration to projection 100. The configuration of projection 100 of first controller 1 will mainly be described below.

Projection 100 includes a top surface (which is also referred to as a top surface 106 below) and a peripheral surface (which is also referred to as an outer peripheral surface 107 below) that extends downward from the top surface. Top surface 106 is distant from upper side surface 11. Outer peripheral surface 107 is located between top surface 106 and upper side surface 11 and extends from top surface 106 to upper side surface 11. Outer peripheral surface 107 is contiguous to top surface 106 as surrounding an outer edge of top surface 106. Top surface 106 extends along the longitudinal direction of upper side surface 11. Projection 100 extends along the longitudinal direction of upper side surface 11 when viewed in a top surface 106 direction. A length in the left-right direction of top surface 106 is longer than a length in the front-rear direction of top surface 106. A surface of top surface 106 does not have to be planar as a result of graining, or may be planar.

In the present example, projection 100 is in a shape of a frustum of a pyramid that becomes smaller in cross-section toward top surface 106. An end area in the longitudinal direction may be rounded as will be described later. From another point of view, when projection 100 is viewed from a side of top surface 106 (that is, the upper side), top surface 106 and outer peripheral surface 107 that surrounds top surface 106 are seen. The shape of projection 100 is not limited to the shape of the frustum of the pyramid. By way of example, projection 100 may be in a shape of a frustum of a cone or a parallelepiped. Outer peripheral surface 107 of projection 100 may be in a shape not spreading outward, toward top surface 106. In other words, outer peripheral surface 107 of projection 100 may be inclined inward, toward top surface 106, or may extend, for example, perpendicularly from upper side surface 11 as not being inclined inward and outward.

A length in the left-right direction of projection 100 (that is, the length in the longitudinal direction of projection 100) may be, for example, at least two times or at least five times as long as the length in the front-rear direction of projection 100. The length in the left-right direction of projection 100 may be, for example, at least fifty percent or at least seventy percent as long as the length in the left-right direction of upper side surface 11. The length in the left-right direction of projection 100 may be, for example, at most twenty-five times or at most fifteen times as long as the length in the front-rear direction of projection 100.

Increase in length in the left-right direction of projection 100 can lead to increase in length in the left-right direction of top surfaces (operation surfaces) of upper button (right) 110 and upper button (left) 120 and better operability. Arrangement of first cushion 191, second cushion 192, and the like at the top surface of projection 100 can also be facilitated.

As shown in Fig. 11, projection 100 lies between a front-surface-side housing 61 and a rear-surface-side housing 62 that form a controller housing 10. Upper side surface 11 is provided with a housing opening 17 defined by an end surface of front-surface-side housing 61 and an end surface of rear-surface-side housing 62. Projection 100 projects through housing opening 17 from the inside of controller housing 10.

As shown in Fig. 12, projection 100 includes a projection flange 19. Projection flange 19 extends outward (more specifically, in the left-right direction and the front-rear direction) from a lower end of a wall portion that defines outer peripheral surface 107. An area above projection flange 19 of projection 100 is exposed through housing opening 17. A lower area including projection flange 19 of projection 100 is located inside controller housing 10. Projection flange 19 functions as a stopper that prevents projection 100 from coming off. In another manner, projection 100 may be comprised of a plurality of components. In yet another manner, projection 100 may be a part of controller housing 10. For example, projection 100 may be formed from at least one of front-surface-side housing 61 and rear-surface-side housing 62.

Projection 100 is an attachment portion configured to be removably attachable to a game device attachment portion provided in the game device. Specifically, projection 100 is configured to be matched with game-device-side recess 310 in the forward direction of the recess (a direction toward the right side surface of game device 3). Projection 100 is configured as being compatible in shape with game-device-side recess 310. From another point of view, the shape of top surface 106 and outer peripheral surface 107 of the projection is compatible with the shape of game-device-side bottom surface 3121 and game-device-side inner peripheral surface 3120 of game-device-side recess 310. While first controller 1 is attached to game device 3, top surface 106 is opposed to game-device-side bottom surface 3121 as abutting thereon or in proximity thereto and outer peripheral surface 107 is opposed to game-device-side inner peripheral surface 3120 as abutting thereon or in proximity thereto. Therefore, for example, when the user attaches first controller 1 to game device 3, first controller 1 is guided to an appropriate attachment position. For example, position displacement of first controller 1 attached to game device 3 in the upward-downward direction or the front-rear direction in game device 3 is suppressed. By way of example, even when force is applied to the controller in the front-rear direction or the upward-downward direction with an operation input by the user in the integrally held state, great position displacement of the controller from game device 3 is suppressed.

As shown in Figs. 11 and 12, first button 110 and second button 120 are located at projection 100. First button 110 and second button 120 are buttons configured to be pressed down by the user and they are components configured to be moved downward by the pressing-down operation. A ground connection portion 51 is connected under first button 110. A tact switch 117 is located under first button 110. As first button 110 is moved downward by the pressing-down operation by the user, tact switch 117 is pressed down by first button 110. First button 110 and tact switch 117 form a button switch. Second button 120 and a tact switch 127 form a button switch.

First button 110 is exposed through a fifth opening 197 located in top surface 106. Exposed portions (see Fig. 10) of first button 110 and second button 120 each form a user-operable portion configured to be pressed down by the user. A ground connection portion 53 is connected under second button 120. Tact switch 127 is located under second button 120. Tact switch 127 is configured to be pressed down by second button 120. On signals from tact switch 117 and tact switch 127 are transmitted to game device 3 and processing in accordance with pressing-down of first button 110 and second button 120 is performed in an executed program.

Synchronization button 50 is located at projection 100. Synchronization button 50 may be used for an instruction for setting processing relating to wireless communication between first controller 1 and game device 3.

First controller 1 includes a terminal accommodation portion 167. First terminal 160 is located along an inner peripheral surface of terminal accommodation portion 167. First terminal 160 extends along the upward-downward direction. Top surface 106 of projection 100 of first controller 1 is provided with a terminal opening 196. First terminal 160 is located inside terminal opening 196. Terminal accommodation portion 167 communicates with terminal opening 196. In other words, terminal accommodation portion 167 is open at top surface 106. Therefore, first terminal 160 can be accessed from the outside of top surface 106.

Terminal opening 196 is located at top surface 106, between first button 110 and second button 120. Therefore, terminal accommodation portion 167 is open at top surface 106, between first button 110 and second button 120.

Light emission portion 150 is located at outer peripheral surface 107 of projection 100. More specifically, light emission portion 150 is located at the front surface side of outer peripheral surface 107. From another point of view, an area of outer peripheral surface 107 where light emission portion 150 is located faces the front surface side. When the user views front surface 15 of first controller 1, the user can visually recognize light from light emission portion 150. Light emission portion 150 typically allows emission of light emitted by an LED to the outside.

Light emission portion 150 is configured to notify the user of predetermined information. Light emission portion 150 may show to the user, information for identification of each controller when game device 3 communicates with a plurality of controllers. Light emission portion 150 may show another type of information to the user. The number of light emission portions 150 is not particularly limited, and for example, four light emission portions 150 are provided. In the present embodiment, four light emission portions 150 are arranged as being aligned in the left-right direction. For example, among four light emission portions 150, light emission portion 150 in a portion corresponding to an identification number provided to a controller may be turned on, or light emission portion(s) 150 in number corresponding to the identification number may be turned on.

Light emission portion 150 is located between first button 110 and second button 120 in the longitudinal direction of projection 100. Light emission portion 150 is located at a position where it is superimposed on first terminal 160 in the longitudinal direction of projection 100. From another point of view, when viewed from the front surface side, light emission portion 150 is located under terminal opening 196.

On top surface 106 of projection 100, first cushion 191 and second cushion 192 are placed. A height of a top surface of each of first cushion 191 and second cushion 192 from upper side surface 11 is higher than a height of top surface 106 of projection 100 from upper side surface 11. From another point of view, first cushion 191 and second cushion 192 raise the height of the top surface of projection 100. First cushion 191 and second cushion 192 do not have to be provided.

Controller 1 may be placed in such a manner that the top surface of projection 100 is opposed to a grounding surface such as a desktop. At this time, first cushion 191 and second cushion 192 themselves come in contact with the grounding surface to suppress direct contact with the grounding surface, of a portion of top surface 106 of projection 100 where the cushion is not located. The top surfaces of first cushion 191 and second cushion 192 come in contact with game-device-side bottom surface 3121 of game-device-side recess 310 when first controller 1 is attached to game device 3.

Regarding the height from upper side surface 11, the height of the top surfaces of first cushion 191 and second cushion 192 is equal to or higher than a highest height of top surface 106 of projection 100. From another point of view, the top surfaces of first cushion 191 and second cushion 192 are located at an uppermost position in first controller 1. First cushion 191 is not particularly limited in shape, and it may be, for example, in a circular shape, an elliptical shape, a rectangular shape, or the like. First cushion 191 may be provided with a through hole. First cushion 191 and second cushion 192 may be the same or different in shape.

In the longitudinal direction of projection 100, first cushion 191 is located closer to right side surface 12 than first button 110. In the longitudinal direction of projection 100, first button 110 is located between first terminal 160 and first cushion 191.

In the longitudinal direction of projection 100, second cushion 192 is located closer to left side surface 14 than second button 120. In the longitudinal direction of projection 100, second button 120 is located between first terminal 160 and second cushion 192. More specifically, in the longitudinal direction of projection 100, second button 120 is located between synchronization button 50 and second cushion 192.

Projection 100 may be divided. Projection 100 may be comprised, for example, of a plurality of projecting members. A structure of attachment of controller 1 is not limited to projection 100. Controller 1 may include an attachment portion other than projection 100. In the attachment portion other than projection 100, first opening 170 for operation as a mouse may be open in a direction in which upper side surface 11 faces.

As shown in Fig. 12, first controller 1 includes a mouse operation sensor 174. Mouse operation sensor 174 is, for example, an optical sensor. Mouse operation sensor 174 includes, for example, a light source (not shown) and a light reception sensor (not shown). A tracking surface (not shown) is irradiated with light from the light source through first opening 170. The light reception sensor detects reflection by the tracking surface, of light radiated from the light source, reflected light being varied with movement of first controller 1 relative to the tracking surface. Being provided with mouse operation sensor 174, first controller 1 can also be used as the mouse. Second controller 2 which will be described later also includes a mouse operation sensor 274 similar in configuration. Each of first cushion 191, second cushion 192, a third cushion 253, and a fourth cushion 254 which will be described later is configured to be in contact with the tracking surface and to function as a mouse skate.

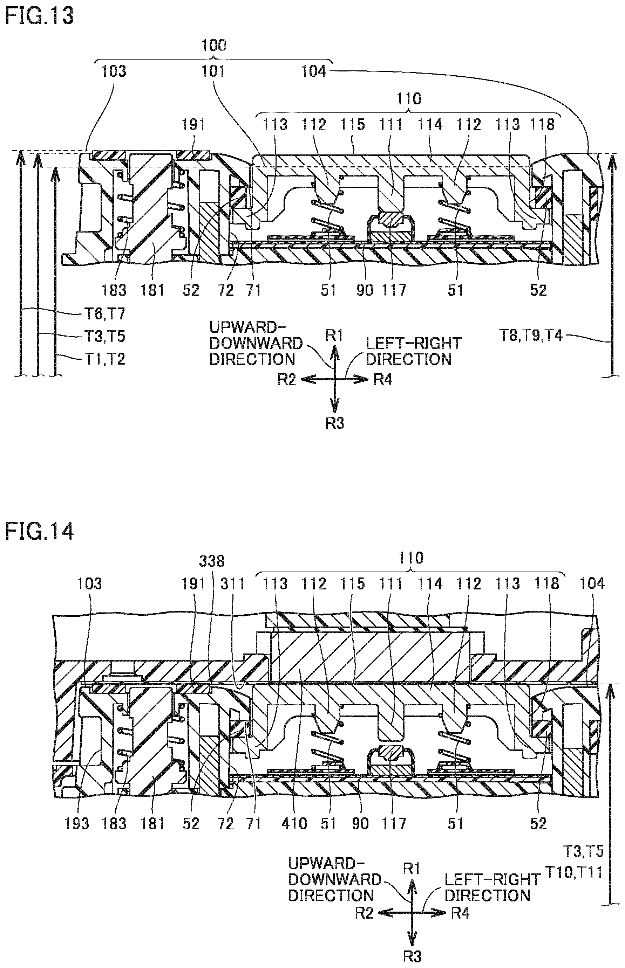

Fig. 13 is a partial schematic cross-sectional view along the line XIII-XIII in Fig. 11. A structure of first button 110 and surroundings will be described in detail below. In the present embodiment, a structure of second button 120 and surroundings and the structure of first button 110 and the surroundings are substantially in symmetry in the left-right direction.

As shown in Fig. 13, a portion of first button 110 exposed at the top surface of projection 100 forms an operation surface 115 which is a surface on which the user is to perform an operation. First button 110 includes a main body portion 114 including operation surface 115, a sidewall 118, a flange portion 113, a first protruding portion 111, and a second protruding portion 112. Operation surface 115 extends along the longitudinal direction of projection 100 at top surface 106 of projection 100. In other words, the longitudinal direction of operation surface 115 extends in the left-right direction. From another point of view, the longitudinal direction of operation surface 115 coincides with the longitudinal direction of projection 100.

In the present embodiment, first button 110 is comprised of a single component and the entirety thereof is comprised of a material which is not a magnet but a material that can be attracted to a magnet. A material for first button 110 is not particularly limited, and it may be comprised of a soft magnetic material. For example, iron may be adopted as the material for first button 110, and by way of example, steel plate cold commercial (SPCC) may be adopted by way of example. The material for first button 110 may contain iron. By way of example, iron to which silicon and/or nickel is added may be adopted as the material for first button 110. By way of example, first button 110 may be comprised of a single component made of a resin-molded soft magnetic material.

In another manner, first button 110 may be comprised of a magnet or a combination of a magnet and a soft magnetic material.

In yet another manner, only a part of first button 110 may be comprised of a soft magnetic material or a magnet. In this case, at least a portion of projection 100 exposed at top surface 106 may be comprised of a soft magnetic material or a magnet. Alternatively, at least a portion that forms operation surface 115 may be comprised of a soft magnetic material or a magnet.

Operation surface 115 is the operation surface of first button 110 exposed through fifth opening 197 and configured to be pressed down by the user. Operation surface 115 faces upward direction R1. Operation surface 115 extends in the left-right direction. A length in the left-right direction of operation surface 115 may be at least ten percent or at least twenty percent as long as the length in the left-right direction of top surface 106 of projection 100. The length in the left-right direction of operation surface 115 may be at least ten percent or at least twenty percent as long as the length in the left-right direction of upper side surface 11 of projection 100.

As shown in Fig. 13, tact switch 117 is located below first protruding portion 111. Tact switch 117 is arranged on a flexible printed circuit 90 (which is also called an FPC 90 below). An upper portion of tact switch 117 is a leaf spring.

While first button 110 is not pressed down by the user, first protruding portion 111 is supported by tact switch 117 from below. When the user presses down first button 110, first button 110 is moved downward from an initial position. First protruding portion 111 of first button 110 moved downward presses down the upper portion of tact switch 117. The upper portion of tact switch 117 is pressed down to deform as sinking downward. A switch is thus turned on inside the tact switch. When the user removes his/her hand from first button 110, the upper portion of tact switch 117 returns to an original shape. As the upper portion of tact switch 117 returns to the original shape, first protruding portion 111 is pushed back upward. Therefore, first button 110 is moved to the initial position. In other words, when first button 110 is pressed down, tact switch 117 biases first button 110 in a direction opposite to a direction of pressing-down. Tact switch 117 may bias first button 110 in the direction opposite to the direction of pressing-down also while first button 110 is not pressed down.

In another manner, first button 110 may be biased upward by a biasing body such as a spring. In other words, first button 110 may be distant from tact switch 117 by being biased upward by the biasing body such as a spring when it is not pressed down by the user. In another manner, a rubber switch may be employed instead of tact switch 117.

As shown in Figs. 12 and 13, first button 110 includes main body portion 114 the surface of which defines the operation surface, sidewall 118 that extends from a lower surface of main body portion 114, and flange portion 113 that extends outward from sidewall 118. Flange portion 113 performs a stopper function to prevent first button 110 from coming off, by being directly or indirectly caught by a first inner surface 71.

First controller 1 includes a first elastically deformable body 52 between the upper surface of flange portion 113 and first inner surface 71. First elastically deformable body 52 is elastically deformed by application of force and elastically returns by removal of application of force. A material for first elastically deformable body 52 is not particularly limited, and for example, rubber may be employed.

When first controller 1 is attached to game device 3, first button 110 is attracted to game-device-side first magnetic element 410. Fig. 14 is a schematic cross-sectional view showing a state in which first button 110 has been attracted to game-device-side first magnetic element 410.

As shown in Fig. 14, when first controller 1 is attached to game device 3, first button 110 and game-device-side first magnetic element 410 are opposed to each other. First button 110 is comprised of a soft magnetic material in the present embodiment. Therefore, when game-device-side first magnetic element 410 comes closer to first button 110, first button 110 is pulled by magnetic force toward game-device-side first magnetic element 410. Force in the direction opposite to the direction of pressing-down is then applied to first button 110. At this time, first elastically deformable body 52 located between flange portion 113 and first inner surface 71 is pushed in a direction toward first inner surface 71 by flange portion 113 to experience elastic deformation in which the first elastic deformable body contracts in the direction opposite to the direction of pressing-down. Consequently, first button 110 is moved in the direction opposite to the direction of pressing-down. In other words, first button 110 is moved in the direction opposite to the direction of pressing-down from the initial position which is a position where the first button has not been pressed down by the user. The direction of pressing-down is, for example, downward direction R3. The direction opposite to the direction of pressing-down is, for example, upward direction R1.

Second button 120 also is similar in configuration to first button 110. As shown in Figs. 10 to 13, top surface 106 of projection 100 includes areas different in height from upper side surface 11. Top surface 106 of projection 100 includes a first area 101, a second area 102, a third area 103, a fourth area 104, and a fifth area 105.

First area 101 is an area in a housing where first button 110 is located, the housing forming top surface 106 of projection 100. First button 110 is located to pass through fifth opening 197 formed in first area 101. Similarly, second area 102 is an area where second button 120 is located. Second button 120 is located to pass through a sixth opening 198 formed in second area 102.

As shown in Fig. 11, third area 103 is an area in the housing that includes top surface 106 in one end area of projection 100, the housing forming top surface 106 of projection 100. From another point of view, third area 103 is contiguous to the end surface at the side of right direction R2 of outer peripheral surface 107 of projection 100. Third area 103 is an area located at the side of upward direction R1 relative to each of first area 101 and second area 102. In the longitudinal direction of projection 100, a length of the third area may be shorter than a length of each of first area 101 and second area 102.

In third area 103, first cushion 191 is located. More specifically, as shown in Fig. 13, first cushion 191 is arranged in a recess located in third area 103. A part of first cushion 191 is exposed to the outside of the recess. Third area 103 may be flat, without being provided with a recess. First cushion 191 may be placed on a flat surface in the third area.

As shown in Fig. 11, fifth area 105 is an area in the housing that includes top surface 106 in the other end area of projection 100, the housing forming top surface 106 of projection 100. From another point of view, fifth area 105 is contiguous to an end surface at the side of left direction R4 of outer peripheral surface 107 of projection 100. Fifth area 105 is an area located at the side of upward direction R1 relative to each of first area 101 and second area 102. In the longitudinal direction of projection 100, a length of fifth area 105 may be shorter than the length of each of first area 101 and second area 102.

In fifth area 105, second cushion 192 is located. Second cushion 192 is arranged in a recess located in fifth area 105. A part of second cushion 192 is exposed to the outside of the recess. Fifth area 105 may be flat, without being provided with a recess. Second cushion 192 may be placed on a flat surface in the fifth area. First cushions 191 and 192 can be concluded as raising the height of projection 100 from upper side surface 11.

Fourth area 104 is an area in the housing that is located between first area 101 and second area 102 in the longitudinal direction of top surface 106, the housing forming top surface 106 of projection 100. In the fourth area, terminal opening 196 and a synchronization button opening 195 are located.

Third area 103 is located at a side of the projection direction relative to fourth area 104. Fifth area 105 is located at a side of the projection direction relative to fourth area 104.

In the longitudinal direction of projection 100, first area 101 is located between third area 103 and fourth area 104. In the longitudinal direction of projection 100, second area 102 is located between fifth area 105 and fourth area 104. In the longitudinal direction of projection 100, each of first area 101, second area 102, and fourth area 104 is located between third area 103 and fifth area 105.

As shown in Fig. 13, a height of first area 101 from upper side surface 11 is expressed as a first height T1. From another point of view, a distance from upper side surface 11 to first area 101 in the upward-downward direction is expressed as first height T1. Similarly, a height of second area 102 from upper side surface 11 is expressed as a second height T2. From another point of view, a distance from upper side surface 11 to second area 102 in the upward-downward direction is expressed as second height T2. Though first height T1 is the same as second height T2 in the present embodiment, they may be different from each other. First area 101 and second area 102 may be located from one end to the other end of top surface 106 in a direction perpendicular to the longitudinal direction of projection 100.

A height of third area 103 from upper side surface 11 is expressed as a third height T3. From another point of view, a distance from upper side surface 11 to third area 103 in the upward-downward direction is expressed as third height T3. Similarly, a height of fifth area 105 from upper side surface 11 is expressed as a fifth height T5. From another point of view, a distance from upper side surface 11 to fifth area 105 in the upward-downward direction is expressed as fifth height T5.

Though third height T3 is the same as fifth height T5 in the present embodiment, they may be different from each other. Though third height T3 and fifth height T5 are higher than first height T1 and second height T2 in the present embodiment, the former may be the same as or lower than the latter. Third area 103 and fifth area 105 may be located from one end to the other end of top surface 106 in the direction perpendicular to the longitudinal direction of projection 100.

A height of fourth area 104 from upper side surface 11 is expressed as a fourth height T4. From another point of view, a distance from upper side surface 11 to fourth area 104 in the upward-downward direction is expressed as fourth height T4. Though fourth height T4 is higher than first height T1 and second height T2 in the present embodiment, the former may be the same as or lower than the latter. Though fourth height T4 is lower than third height T3 and fifth height T5 in the present embodiment, the former may be the same as or higher than the latter. Fourth area 104 may be located from one end to the other end of top surface 106 in the direction perpendicular to the longitudinal direction of projection 100.

A height of the top surface of first cushion 191 from upper side surface 11 is expressed as a sixth height T6. From another point of view, a distance from upper side surface 11 to the top surface of first cushion 191 in the upward-downward direction is expressed as sixth height T6. Similarly, a height of the top surface of second cushion 192 from upper side surface 11 is expressed as a seventh height T7. From another point of view, a distance from upper side surface 11 to the top surface of second cushion 192 in the upward-downward direction is expressed as seventh height T7.

A height of operation surface 115 from upper side surface 11 at the time when first button 110 is located at the initial position is expressed as an eighth height T8. From another point of view, a distance from upper side surface 11 to operation surface 115 in the upward-downward direction is expressed as eighth height T8. Similarly, a height of operation surface 125 from upper side surface 11 at the time when second button 120 is located at the initial position is expressed as a ninth height T9. From another point of view, a distance from upper side surface 11 to operation surface 125 in the upward-downward direction is expressed as ninth height T9.

As shown in Figs. 13 and 14, first button 110 is movable upward. As shown in Fig. 14, the height of operation surface 115 from upper side surface 11 at the time when first button 110 is attracted to game-device-side first magnetic element 410 and is in contact with game-device-side bottom surface 3121 is expressed as a tenth height T10. Similarly, a height of operation surface 125 from upper side surface 11 at the time when second button 120 is attracted to game-device-side second magnetic element 420 and is in contact with game-device-side bottom surface 3121 is expressed as an eleventh height T11.

### <Connection Structure>

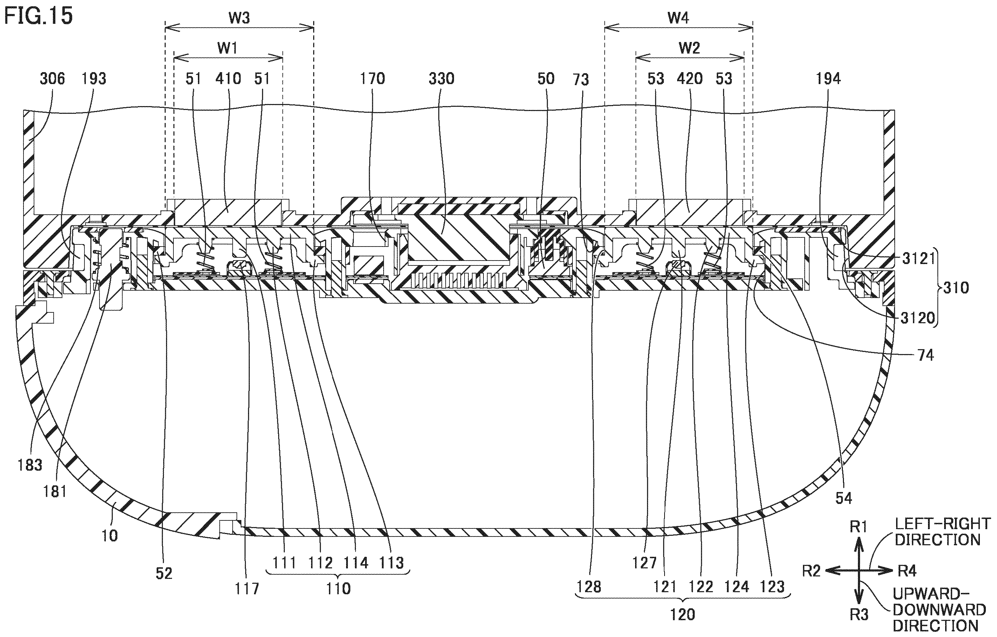

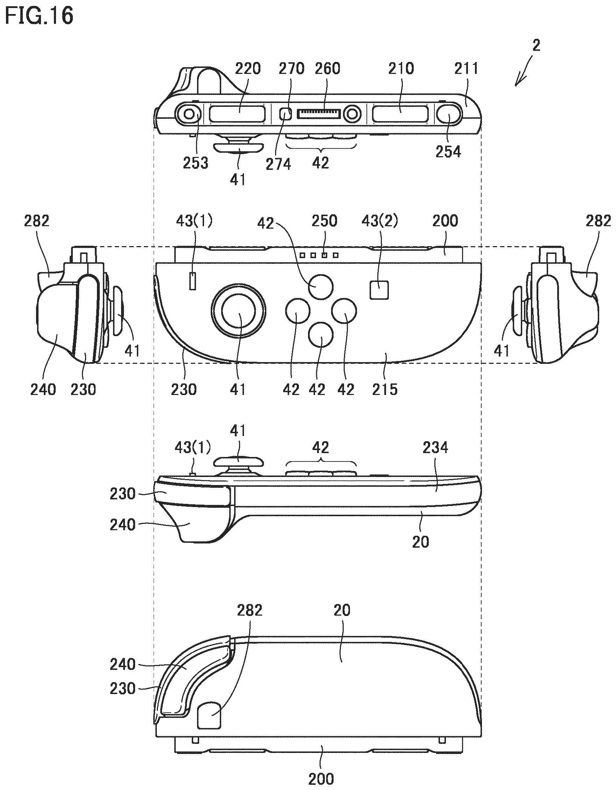

Fig. 15 is a schematic cross-sectional view showing a state in which the controller has been mounted to game device 3. The schematic cross-sectional view shown in Fig. 16 is in parallel to each of the left-right direction and the upward-downward direction.

As shown in Fig. 15, projection 100 of first controller 1 is matched with game-device-side recess 310 of game device 3. First button 110 is attracted to game-device-side first magnetic element 410 by magnetic force. In the left-right direction, a length (a third length W3) of the top surface of first button 110 is longer than a length (a first length W1) of game-device-side first magnetic element 410. The first button is attracted to game-device-side first magnetic element 410 by magnetic force. Second button 120 is attracted to game-device-side second magnetic element 420 by magnetic force. In the left-right direction, a length (a fourth length W4) of the top surface of second button 120 is longer than a length (a second length W2) of game-device-side second magnetic element 420. Second button 120 further includes a first protruding portion 121 and a second protruding portion 122.

Fig. 16 is a schematic six-view drawing showing a configuration of second controller 2. As shown in Fig. 16, second controller 2 includes, for example, a joystick 41 representing an exemplary direction input portion and one set of four buttons 42 aligned in a cross shape. First controller 1 includes + button 33(1) and home button 33(2), whereas second controller 2 includes a - button 43(1) and a capture button 43(2). Second controller 2 includes a third button 210 and a fourth button 220, a synchronization button, a shoulder button (left) 230, and a Z shoulder button (left) 240. Third button 210 and fourth button 220 and the synchronization button are located at a projection 200. Second controller 2 further includes a light emission portion 250, a second terminal 260 configured to be connected to a main body second terminal 341 of game device 3, a mouse sensor opening 270 configured to guide light to mouse operation sensor 274, third cushion 253, fourth cushion 254, and an operation portion 282 that implements a removal mechanism for removal of projection 200 from game device 3. A structure or a function of each feature is substantially the same as that of first controller 1. At least one of functions may be different. For example, capture button 43(2) may be used for storage of an image to be outputted to display 305. Each of third button 210 and fourth button 220 is an attraction button configured to be attracted by magnetic force.

Positional relation between joystick 31 and one set of four buttons 32 in first controller 1 in the horizontally held state is the same as positional relation between joystick 41 and one set of four buttons 42 in second controller 2. Specifically, in first controller 1, joystick 31 is located at the left of one set of four buttons 32. Similarly, in second controller 2, joystick 41 is located at the left of one set of four buttons 42. In the horizontally held state, on the other hand, shoulder button (right) 130 and Z shoulder button (right) 140 are located at the right in first controller 1, whereas shoulder button (left) 230 and Z shoulder button (left) 240 are located at the left in second controller 2. From another point of view, in the integrally held state, joystick 31 in first controller 1 is located at the lower side of one set of four buttons 32, whereas joystick 41 in second controller 2 is located at the upper side of one set of four buttons 42. In the integrally held state, on the other hand, shoulder button (right) 130 and Z shoulder button (right) 140 of first controller 1 and shoulder button (left) 230 and Z shoulder button (left) 240 of second controller 2 are all located at the upper side.

### <Apparatus>

### (First Embodiment)

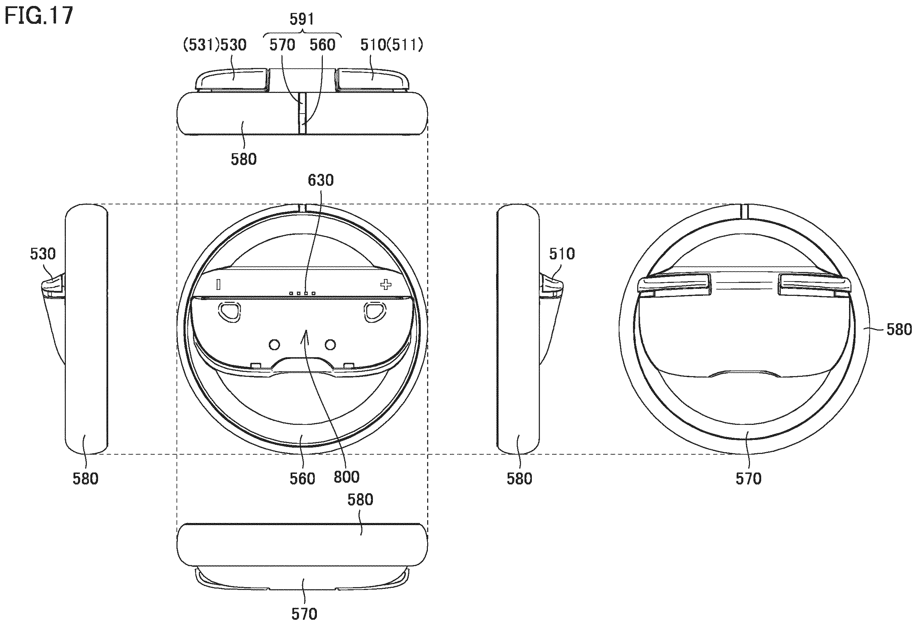

Details of a configuration of an apparatus according to a first embodiment will now be described. Fig. 17 is a schematic six-view drawing showing the configuration of the apparatus according to the first embodiment.

As shown in Figs. 1, 2, and 17, apparatus 500 includes at least a front-side housing 560, a rear-side housing 570, an internal housing 550, first movable portion 510, second movable portion 520, third movable portion 530, fourth movable portion 540, and a rim cover 580. Apparatus 500 is in a shape of a steering wheel. A part of front-side housing 560 and a part of rear-side housing 570 form a rim 591. Rim cover 580 is configured to cover rim 591. Accommodation portion 800 is located in an area surrounded by rim 591.

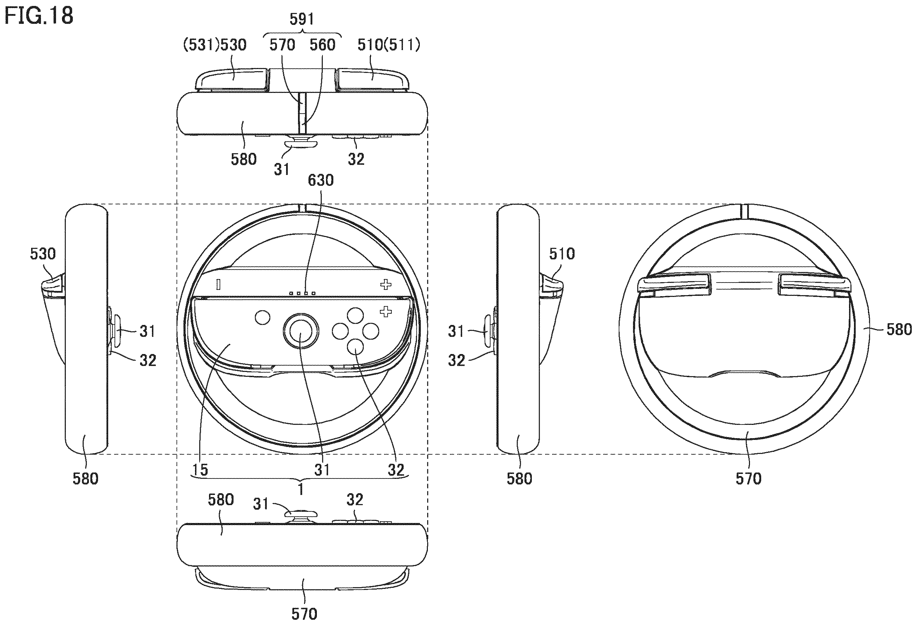

Fig. 18 is a schematic six-view drawing showing a state in which the first controller has been attached to apparatus 500. As shown in Fig. 18, first controller 1 is attached to apparatus 500 such that front surface 15 of first controller 1 faces forward and projection 100 faces upward. Projection 100 is covered such that at least a part thereof is not exposed. An upper portion of projection 100 is covered not to be exposed. One set of fourth buttons 32 and joystick 31 of first controller 1 face forward. One set of fourth buttons 32 and joystick 31 of first controller 1 are exposed at accommodation portion 800. The user can operate first controller 1 with first controller 1 being attached to apparatus 500. Apparatus 500 is a peripheral device to which first controller 1 is to be attached. Second controller 2 is also similarly attachable to apparatus 500. Specifically, second controller 2 is attached to apparatus 500 such that a front surface 215 faces forward and projection 200 faces upward.

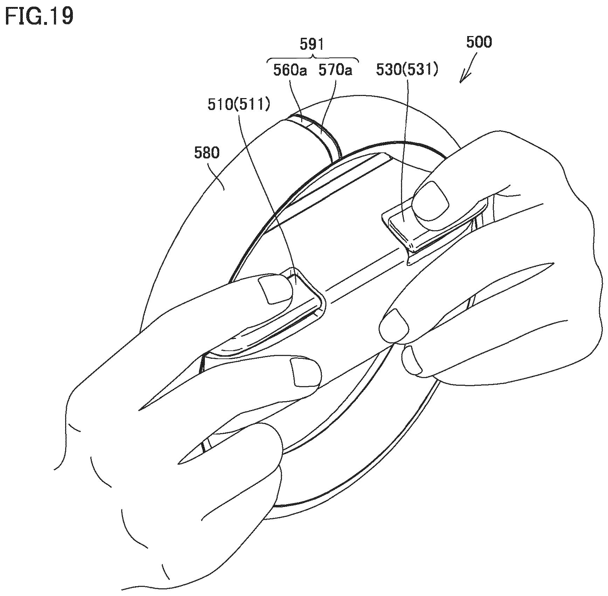

Fig. 19 is a schematic perspective view showing a state in which a user is holding apparatus 500. As shown in Fig. 19, the user holds apparatus 500 as holding a steering wheel. Specifically, apparatus 500 is configured such that the user holds opposing left and right portions of rim 591 with both hands. Each of a first surface 511 of first movable portion 510 and a third surface 531 of third movable portion 530 is located at the rear of rim 591. Each of first surface 511 and third surface 531 is an exemplary user-operable portion configured to be operated by the user. The user-operable portion of apparatus 500 is located at the rear of rim 591.

First surface 511 of first movable portion 510 is located at a position where it is to be covered from the right side by a right forefinger, a right middle finger, or a right ring finger of the user. Third surface 531 of third movable portion 530 is located at a position where it is to be covered from the left side by a left forefinger, a left middle finger, or a left ring finger of the user. First surface 511 and third surface 531 are configured to be pressed down by a finger of the user.

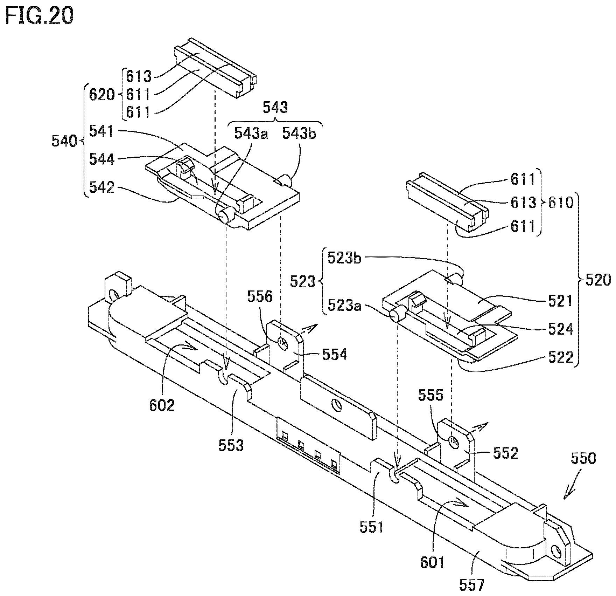

A state of assembly of the apparatus according to the first embodiment will now be shown and each feature will be described with reference to Figs. 20 to 23. Fig. 20 shows internal housing 550. As shown in Fig. 20, second movable portion 520 includes a second surface 521, a second pushing portion 522, a second axis 523, and a first magnetic member 610. At second surface 521, a first magnetic member arrangement recess 524 is located. First magnetic member 610 is arranged in first magnetic member arrangement recess 524. Second pushing portion 522 is located opposite to second surface 521. Second axis 523 includes a first shaft member 523a and a second shaft member 523b. First magnetic member arrangement recess 524 is located between first shaft member 523a and second shaft member 523b in an axial direction of second axis 523.

Fourth movable portion 540 includes a fourth surface 541, a fourth pushing portion 542, a fourth axis 543, and a second magnetic member 620. At fourth surface 541, a second magnetic member arrangement recess 544 is located. Second magnetic member 620 is arranged in second magnetic member arrangement recess 544. Fourth pushing portion 542 is located opposite to fourth surface 541. Fourth axis 543 includes a third shaft member 543a and a fourth shaft member 543b. Second magnetic member arrangement recess 544 is located between third shaft member 543a and fourth shaft member 543b in an axial direction of fourth axis 543.

Each of first magnetic member 610 and second magnetic member 620 is a component configured to be attracted to a magnet by magnetic force. Each of first magnetic member 610 and second magnetic member 620 includes a component comprised of a magnet or a material which is not a magnet but is attracted to a magnet, such as a soft magnetic material. As shown in Fig. 20, each of first magnetic member 610 and second magnetic member 620 includes a pair of yokes 611 and a magnet 613. In other words, each of first magnetic member 610 and second magnetic member 620 includes magnet 613. A material for magnet 613 is not particularly limited. Magnet 613 is, for example, a neodymium magnet. A material for yoke 611 is not particularly limited. For example, a soft magnetic material is employed as a material for yoke 611, and for example, iron is employed. Magnet 613 lies between yokes 611 in the front-rear direction. In another manner, each of first magnetic member 610 and second magnetic member 620 may include magnet 613 without including yoke 611. Alternatively, each of first magnetic member 610 and second magnetic member 620 may include a component comprised of a soft magnetic material without including magnet 613.

First magnetic member 610, second magnetic member 620, and game-device-side magnetic elements 410 and 420 may be identical components. For example, they may be identical in shape or magnetic characteristics. With the identical components, feeling in attachment and removal of the controller felt by the user can be similar, and uncomfortable feeling can be suppressed. They may be different components.

Internal housing 550 includes an internal housing main body portion 557, a first support plate 551, a second support plate 552, a third support plate 553, and a fourth support plate 554. Internal housing main body portion 557 extends in the longitudinal direction and it is substantially in a plate shape. First support plate 551 and second support plate 552 are erected from internal housing main body portion 557 as being opposed to each other in a direction of a short side, at one longitudinal side of internal housing main body 557. Internal housing main body portion 557 is provided with a second movable portion arrangement hole 601 and a fourth movable portion arrangement hole 602. Second movable portion arrangement hole 601 is located between first support plate 551 and second support plate 552 in the direction of the short side of internal housing main body 557. Third support plate 553, fourth support plate 554, and fourth movable portion arrangement hole 602 are located similarly at the other longitudinal side of internal housing main body 557.

First support plate 551 is provided with a notch in an upper portion at the one longitudinal side of internal housing main body 557. Second support plate 552 is provided with a second shaft member arrangement hole 555. Second movable portion 520 is rotatably supported by first support plate 551 and second support plate 552 by arrangement of first shaft member 523a at the notch of first support plate 551 and arrangement of second shaft member 523b in second shaft member arrangement hole 555. A part of supported second movable portion 520 is arranged in second movable portion arrangement hole 601. At least a part of first magnetic member 610 is arranged in second movable portion arrangement hole 601. At least a part of second movable portion 520 is made larger than second movable portion arrangement hole 601 so as to be prevented from coming off. The other longitudinal side of internal housing main body 557 is also similarly structured. The structure of each support plate or each shaft member is by way of example, and the shape thereof is not limited so long as the first or second movable portion is rotatably supported.

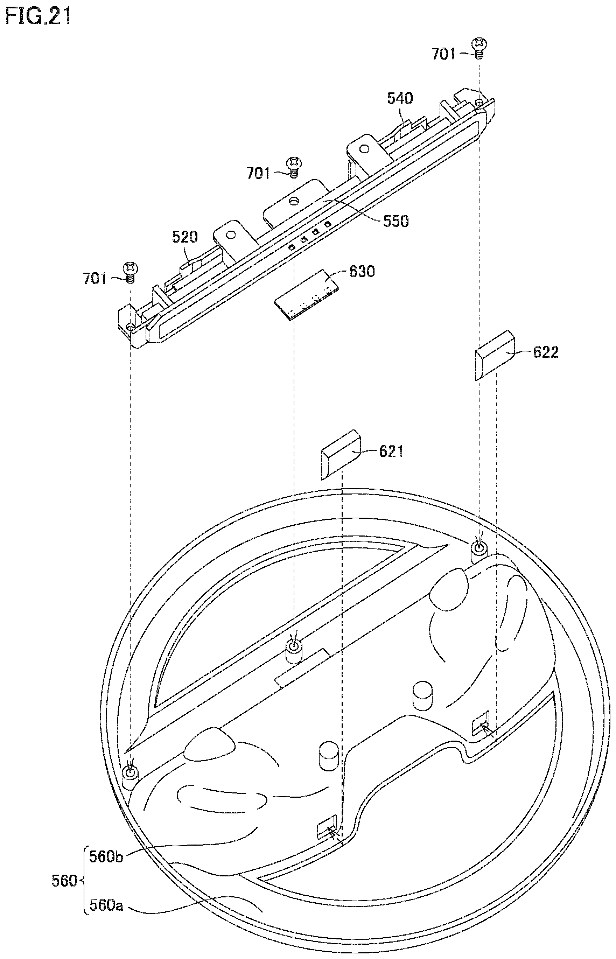

Fig. 21 is a second exploded schematic perspective view when front-side housing 560 is seen from a back side. As shown in Fig. 21, apparatus 500 includes a first rubber member 621, a second rubber member 622, and a light guide member 630. Front-side housing 560 includes a first annular portion 560a and a first bridging portion 560b. At least a part of a front surface of first bridging portion 560b forms a part of accommodation portion 800. First bridging portion 560b extends to bridge a space surrounded by first annular portion 560a. Internal housing 550 is mounted to front-side housing 560 with three first fastening screws 701. Light guide member 630 is arranged between first bridging portion 560b and internal housing 550. First rubber member 621 and second rubber member 622 are mounted to holes formed in first bridging portion 560b. First rubber member 621 and second rubber member 622 are at least in part exposed within accommodation portion 800.

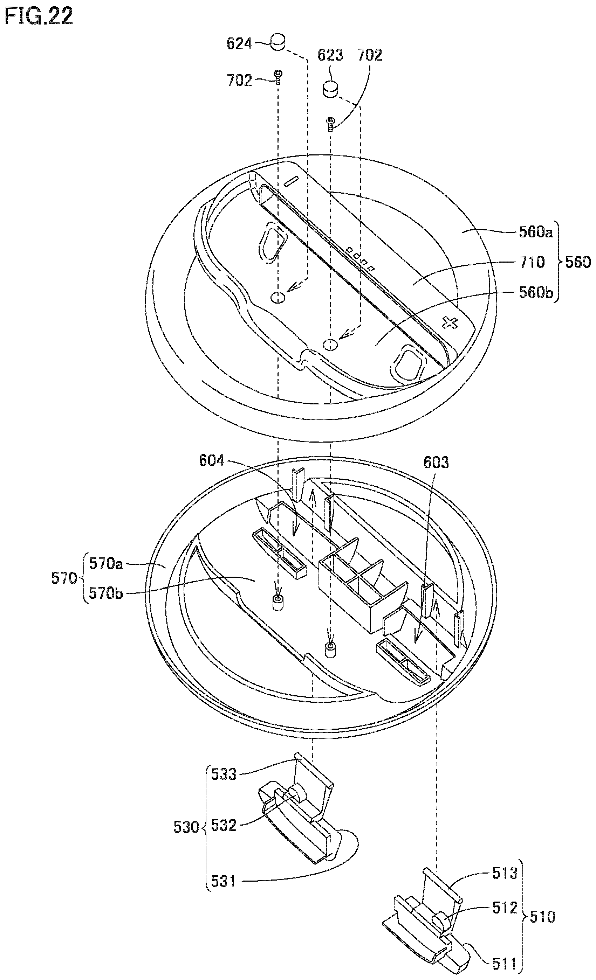

Fig. 22 is a schematic diagram showing that front-side housing 560 to which each component shown in Fig. 21 has been assembled is assembled to another component. As shown in Fig. 22, apparatus 500 includes a third rubber member 623 and a fourth rubber member 624 in accommodation portion 800. Rear-side housing 570 includes a second annular portion 570a and a second bridging portion 570b. Second bridging portion 570b extends to bridge a space surrounded by second annular portion 570a. Second bridging portion 570b is provided with a first movable portion arrangement hole 603 and a third movable portion arrangement hole 604. A part of first movable portion 510 is arranged in first movable portion arrangement hole 603. A part of third movable portion 530 is arranged in third movable portion arrangement hole 604.

First movable portion 510 includes first surface 511, a first pushing portion 512, and a first axis 513. First surface 511 extends in the left-right direction (see Fig. 17). First surface 511 is to be pushed by the user from above. First pushing portion 512 faces opposite to an orientation of first surface 511. Similarly, third movable portion 530 includes third surface 531, a third pushing portion 532, and a third axis 533. Third surface 531 extends in the left-right direction (see Fig. 17). Third surface 531 is to be pushed by the user from above. Third pushing portion 532 faces opposite to an orientation of third surface 531. First pushing portion 512 is configured to push second movable portion 520 and third pushing portion 532 is configured to push fourth movable portion 540.

Front-side housing 560 is mounted to rear-side housing 570 with two second fastening screws 702. Rear-side housing 570 is fixed at the rear of front-side housing 560. Second fastening screw 702 passes from the front, through a hole located at a portion which is first bridging portion 560b and defines accommodation portion 800. Third rubber member 623 covers one of two second fastening screws 702. Third rubber member 623 is mounted to first bridging portion 560b. Fourth rubber member 624 covers the other of two second fastening screws 702. Fourth rubber member 624 is mounted to first bridging portion 560b. Front-side housing 560 and rear-side housing 570 may be fastened by a not-shown rim portion fastening screw in addition to or instead of the first and second fastening screws. A plurality of annular portion fastening screws may be employed. The annular portion fastening screw is configured to fasten first annular portion 560a and second annular portion 570a to each other. The annular portion fastening screw may pass through forward from the rear of second annular portion 570a toward first annular portion 560a.

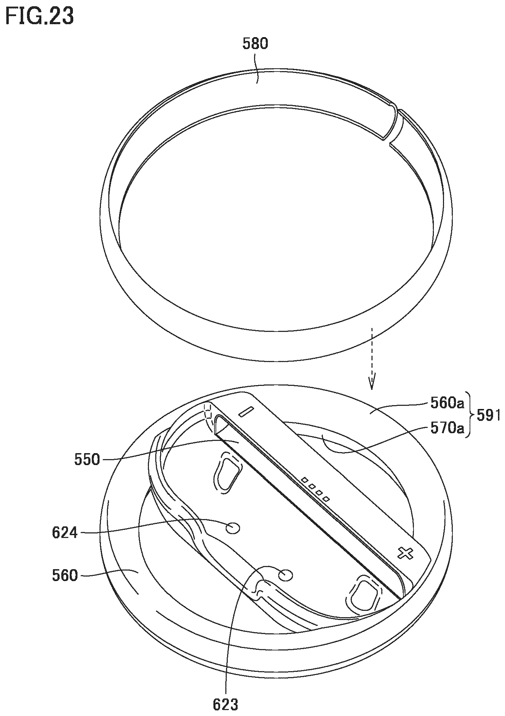

As front-side housing 560 and rear-side housing 570 are assembled as shown in Fig. 23, rim 591 is formed. Rim 591 is formed by first annular portion 560a of front-side housing 560 and second annular portion 570a of rear-side housing 570. Rim cover 580 is mounted to rim 591. Though rim cover 580 is substantially annular, it is not perfectly annular. Specifically, rim cover 580 is discontinuous at an upper end. Rim cover 580 is configured to cover rim 591 except for an upper end area of an outer peripheral edge of rim 591. Rim cover 580 is, for example, a resin molded article.

Since rim cover 580 covers rim 591 formed by front-side housing 560 and rear-side housing 570, touch by a hand on a joint therebetween can be suppressed. Since rim cover 580 is discontinuous at the upper end, it can readily be mounted to rim 591. For example, rim cover 580 may include an engagement element configured to be engaged with a hole located in rim 591 or may be bonded to rim 591 with an adhesive. A cut in rim cover 580 is fixed to rim 591 so as to be located in the upper end area of rim 591. In the present embodiment, cuts of rim cover 580 are distant from each other. Therefore, the upper end area of rim 591 is not covered with rim cover 580. Therefore, the user can identify the upper end of rim 591 with the sense of sight or the sense of touch. Therefore, the user can instantaneously determine which side is located above during a steering operation. Rim 591, that is, at least one of front-side housing 560 and rear-side housing 570, may include a projection that projects in a direction of an outer geometry so as to bury a gap between the cuts in rim cover 580.

In an example where the annular portion fastening screw is provided, the annular portion fastening screw may be exposed at a portion except for the upper end area of the outer peripheral edge of rim 591. In other words, the annular portion fastening screw may be inserted in a screw hole located at the portion except for the upper end area of the outer peripheral edge of rim 591. The annular portion fastening screw located at such a position is covered with rim cover 591. Therefore, touch by the user on the annular portion fastening screw or the screw hole is suppressed. Since the first and second fastening screws are covered with the third and fourth rubber members, respectively, none of screws that fasten front-side housing 560 and rear-side housing 570 to each other, also inclusive of the annular portion fastening screw as above, is exposed in the present embodiment.

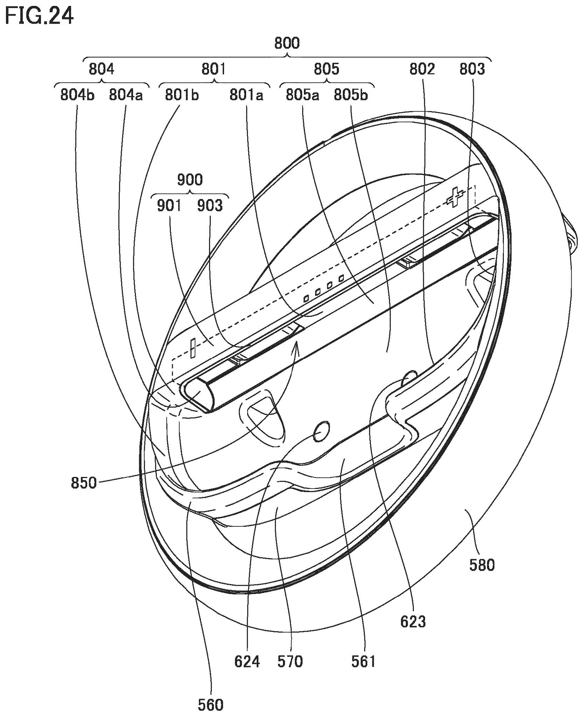

A configuration of accommodation portion 800 will now be described with reference to Figs. 24 to 27. An example where first controller 1 is attached to apparatus 500 will basically be described also in the description below. When second controller 2 is attached and removed and while it is attached, apparatus 500 exhibits a function substantially similar to the function when first controller 1 is attached and removed and while it is attached. In the description below, a structure at one side in the left-right direction will be described, and description of the structure at the other side which may substantially be repetition may not be provided.

Fig. 24 is a schematic perspective view showing the configuration of apparatus 500 according to the first embodiment. Apparatus 500 includes accommodation portion 800. Accommodation portion 800 is open forward. Accommodation portion 800 is defined by an inner surface including, for example, an upper surface 801, a lower surface 802, a bottom surface 805, a right surface 803, and a left surface 804. Upper surface 801 faces downward. Lower surface 802 faces upward. Bottom surface 805 faces forward. Right surface 803 faces to the left. Left surface 804 faces to the right. To face in a certain direction may mean facing substantially in that direction, and is not limited to facing exactly in that direction. Accommodation portion 800 is provided with a projection accommodation portion 850. Projection accommodation portion 850 will be described later.

Upper surface 801 includes a first upper surface area 801a and a second upper surface area 801b. First upper surface area 801a is defined by internal housing 550. Second upper surface area 801b is defined by front-side housing 560. In the upward-downward direction, second upper surface area 801b is located below first upper surface area 801a. Lower surface 802 is opposed to upper surface 801. Lower surface 802 is defined by front-side housing 560. Bottom surface 805 includes a first bottom surface area 805a and a second bottom surface area 805b. First bottom surface area 805a is defined by internal housing 550. Second bottom surface area 805b is defined by front-side housing 560. In the upward-downward direction, second bottom surface area 805b is located below first bottom surface area 805a.

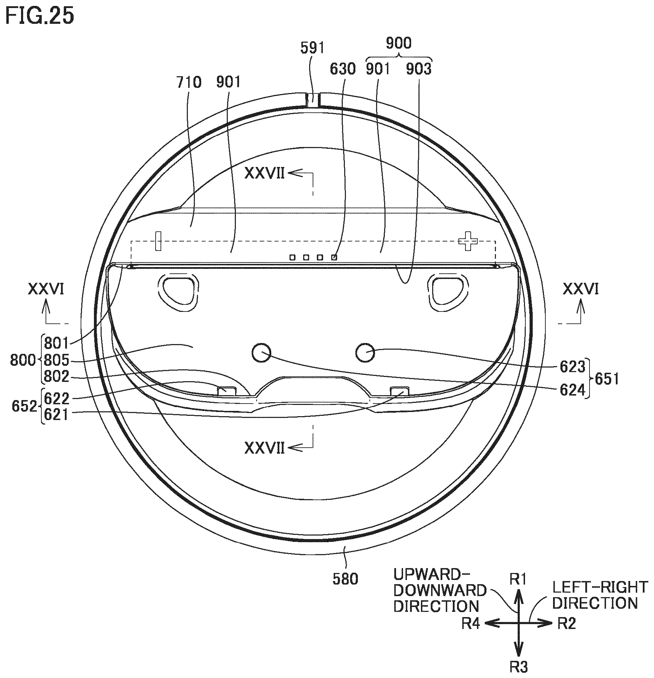

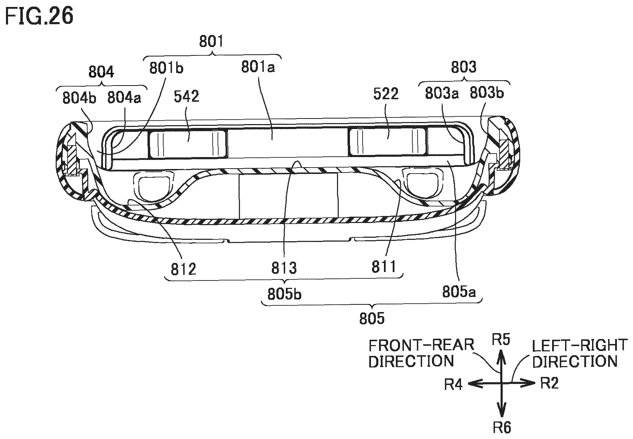

Fig. 25 is a schematic front view showing the configuration of apparatus 500 according to the first embodiment. Fig. 26 is a schematic cross-sectional view along the line XXVI-XXVI in Fig. 25. The cross-section shown in Fig. 26 is in parallel to each of the front-rear direction and the left-right direction.

As shown in Fig. 26, right surface 803 includes a first right surface area 803a and a second right surface area 803b. First right surface area 803a is defined by internal housing 550. Second right surface area 803b is defined by front-side housing 560. In the left-right direction, second right surface area 803b is located at the right of first right surface area 803a. Similarly, left surface 804 includes a first left surface area 804a and a second left surface area 804b. First left surface area 804a is defined by internal housing 550. Second left surface 804 area is defined by front-side housing 560. In the left-right direction, second left surface area 804b is located at the left of first left surface area 804a.

Right surface 803 is opposed to left surface 804. Specifically, first right surface area 803a is opposed to first left surface area 804a. Second right surface area 803b is opposed to second left surface area 804b. In the left-right direction, each of second pushing portion 522 and fourth pushing portion 542 is located between first right surface area 803a and first left surface area 804a. Each of second pushing portion 522 and fourth pushing portion 542 is exposed at first upper surface area 801a.

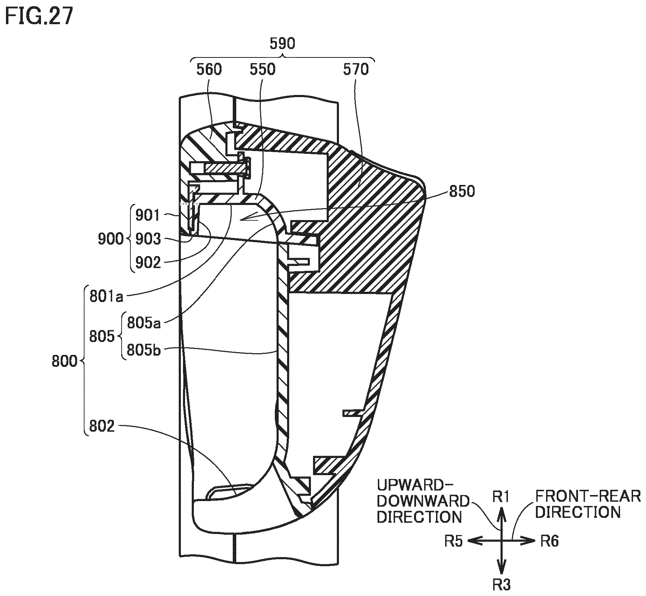

Fig. 27 is a schematic cross-sectional view along the line XXVII-XXVII in Fig. 25. The cross-section shown in Fig. 27 is in parallel to each of the front-rear direction and the upward-downward direction.

As shown in Fig. 27, apparatus 500 includes a flange 900. Flange 900 includes a flange inner surface 902, a flange outer surface 901, and a flange lower surface 903. Flange inner surface 902 is contiguous to first upper surface area 801a. Flange inner surface 902 extends downward from first upper surface area 801a. Flange inner surface 902 faces rearward. Flange inner surface 902 is substantially perpendicular to first upper surface area 801a. Flange inner surface 902 is defined by internal housing 550. Flange inner surface 902 is opposed to first bottom surface area 805a. First bottom surface area 805a is in a shape curved convexly upward and rearward. An interval between flange inner surface 902 and first bottom surface area 805a in the front-rear direction increases toward below.

Flange outer surface 901 is located opposite to flange inner surface 902. Flange outer surface 901 faces forward. Flange outer surface 901 is substantially in parallel to flange inner surface 902. Flange outer surface 901 is defined by front-side housing 560. First bridging portion 560b includes a front face 710 above controller housing 10 of attached first game controller 1, front face 710 extending laterally to cover at least projection 100. Flange outer surface 901 is a part of front face 710. Flange outer surface 901 is a part of first bridging portion 560b. In the front-rear direction, flange outer surface 901 is a portion superimposed on flange inner surface 902.

As shown in Fig. 27, flange lower surface 903 is contiguous to flange outer surface 901. Flange lower surface 903 extends rearward from flange outer surface 901. Flange lower surface 903 faces downward. Flange lower surface 903 is contiguous to flange inner surface 902. Flange lower surface 903 extends forward from flange inner surface 902. Flange inner surface 902 is defined by internal housing 550 and front-side housing 560.

Accommodation portion 800 thus includes in an upper portion, projection accommodation portion 850 having a front side defined by flange 900. Projection accommodation portion 850 is open downward, and communicates with other spaces in accommodation portion 800. At least a part of projection accommodation portion 850 is defined by first upper surface area 801a, first bottom surface area 805a, first right surface area 803a, first left surface area 804a, and flange inner surface 902. As shown in Fig. 18, at least a part of the projection in the game controller accommodated in accommodation portion 800 is accommodated in projection accommodation portion 850. At least a part of a front face of the projection of the game controller accommodated in accommodation portion 800 is covered with flange 900. The front face of the projection may be covered with flange 900 except for a root portion thereof. Therefore, unnecessary touch by the user on the projection of the game controller attached to apparatus 500 can be suppressed.

Though details will be described later, in the present embodiment, the game controller is attached to apparatus 500 by magnetic force. For example, first button 110 is contacted by magnetic force with second pushing portion 522 which is a part of second movable portion 520 and is exposed at first upper surface area 801a. Similarly, second button 120 is contacted by magnetic force with fourth pushing portion 542 which is a part of fourth movable portion 540 and is exposed at first upper surface area 801a. Second pushing portion 522 and fourth pushing portion 542 are thus attracted to other objects by magnetic force, whereas flange 900 can cover a part of a front side of accommodation portion 800, in particular, a front part of second pushing portion 522 and fourth pushing portion 542, to suppress attraction of an unintended object to second pushing portion 522 or fourth pushing portion 542.

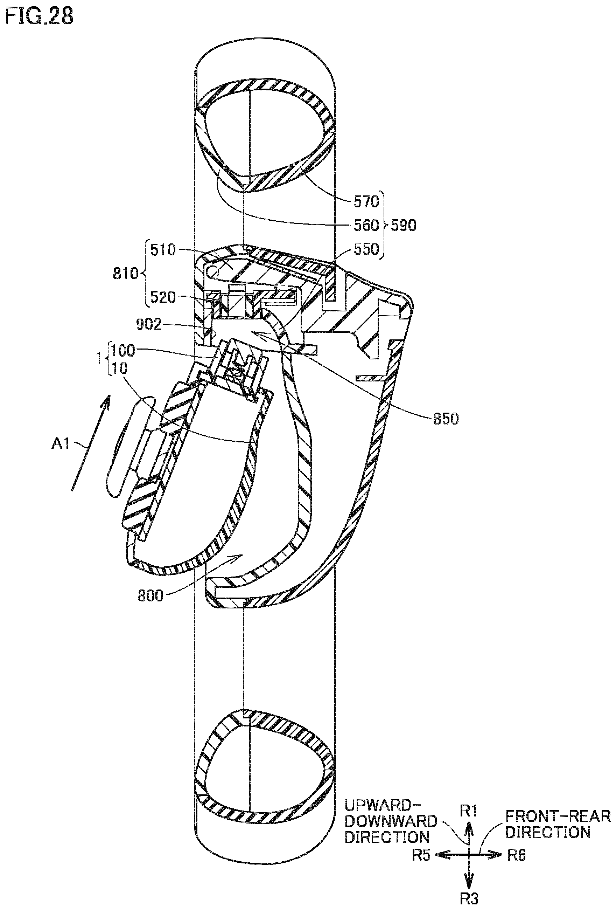

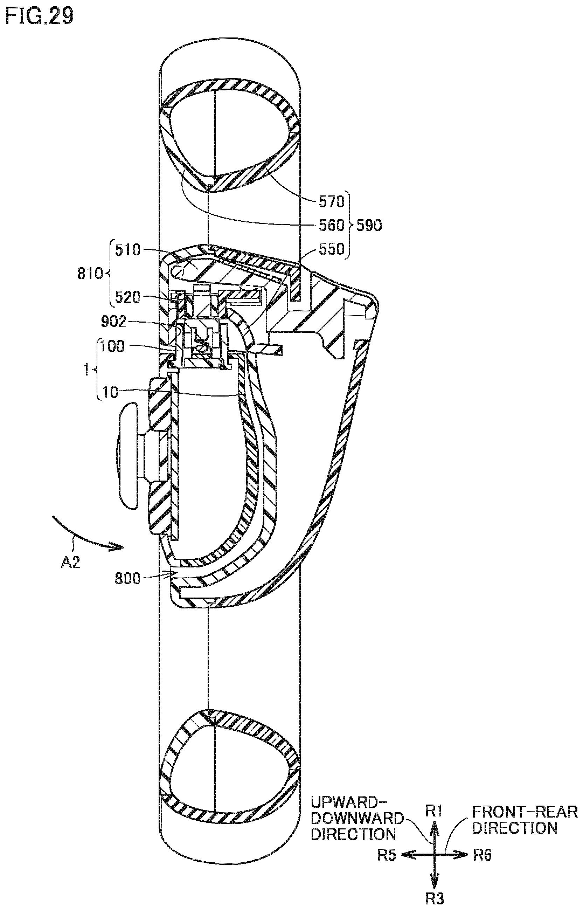

A method of attaching first controller 1 to apparatus 500 will now be described. Fig. 28 is a schematic cross-sectional view showing a state in which first controller 1 is being attached to apparatus 500. Fig. 29 is a schematic cross-sectional view showing a state in which first controller 1 has been attached to apparatus 500.

Since apparatus 500 is provided with flange 900, first controller 1 cannot be inserted in parallel rearward from a front surface side of accommodation portion 800. Therefore, as shown in Fig. 28, first controller 1 is initially tilted in such a manner that an upper portion thereof including projection 100 is located at a back side with respect to a lower portion thereof, and inserted into accommodation portion 800 from a side of projection 100, from below at the front surface side of accommodation portion 800 upward toward the back along a direction shown with a first arrow A1. Projection 100 is then inserted in projection accommodation portion 850 opposed to flange inner surface 902. Then, as shown in Fig. 29, first controller 1 is rotated along a direction shown with a second arrow A2 generally around projection 100 such that the lower portion of first controller 1 comes closer to accommodation portion 800. First controller 1 is thus accommodated in accommodation portion 800. In the present embodiment, first button 110 and second button 120 of first controller 1 are configured to be attracted to second movable portion 520 and fourth movable portion 540 of apparatus 500, respectively.

Apparatus 500 according to the present embodiment thus includes flange 900. Therefore, in attachment of first controller 1 to apparatus 500, while the attachment portion of first controller 1 is initially inserted in between flange 900 and bottom surface 805 of accommodation portion 800, the attachment portion should be pushed in such that a side opposite to the attachment portion is rotated toward the inside of accommodation portion 800. Therefore, the user is guided to bring a position in the front-rear direction of attached first controller 1 to an appropriate position more readily than in an example where the user simply pushes in controller 1 in parallel to accommodation portion 800 from the front. Therefore, as will be described later, lowering in operability due to position displacement in the front-rear direction between second movable portion 520 and button 110 of first controller 1 can be suppressed.

Apparatus 500 includes magnetic member 610 configured to be attracted to first button 110 by magnetic force. First button 110 is configured to be contacted with second pushing portion 522 by magnetic force. Therefore, first controller 1 can readily be attached to apparatus 500. Since buttons 110 and 120 are pulled by magnetic force, position alignment of first controller 1 in accommodation portion 800 is facilitated. In particular, it is difficult at the front surface side to visually recognize projection accommodation portion 850 in which projection 100 is to be inserted, due to the presence of flange 900. Since pushing portions 522 and 542 are exposed in this projection accommodation portion, insertion of projection 100 in an appropriate position is facilitated.

First bottom surface area 805a of bottom surface 805 opposed to flange inner surface 902 is in the shape curved convexly upward and rearward. Therefore, in attachment of first controller 1 to accommodation portion 800, interference of projection 100 with first bottom surface area 805a in rearward and upward insertion from the side of projection 100 into projection accommodation portion 850 can be suppressed. In attachment of first controller 1 to accommodation portion 800, projection 100 may come in contact with first bottom surface area 805a. The shape of first bottom surface area 805a in the present embodiment is by way of example. For example, first bottom surface area 805a may be in such a shape that a distance from projection 100 of attached first controller 1 increases in the downward direction. Alternatively, first bottom surface area 805a may be in such a shape that a distance between a lower end of first bottom surface area 805a and projection 100 of attached first controller 1 is longer than a distance between a lower end of flange inner surface 902 and projection 100.

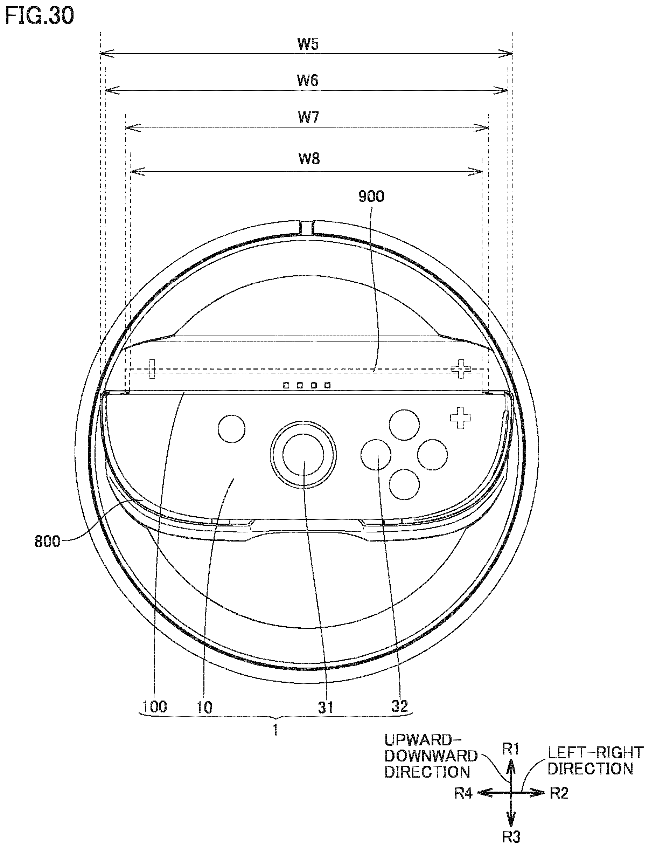

Fig. 30 is a schematic front view showing a length in the left-right direction of each portion in the state in which first controller 1 has been attached to apparatus 500. As shown in Fig. 30, a length (a seventh length W7) in the left-right direction of flange 900 is shorter than a length (a fifth length W5) in the left-right direction of the opening that is open forward of accommodation portion 800. In other words, the length in the left-right direction of projection accommodation portion 850 is shorter than the length in the left-right direction of the opening that is open forward of accommodation portion 800. Seventh length W7 may be, for example, at least 0.7 time and at most 0.95 time as long as fifth length W5. The length (seventh length W7) in the left-right direction of flange 900 is longer than a length (an eighth length W8) in the left-right direction of projection 100 which is the attachment portion of first controller 1 and shorter than a length (a sixth length W6) in the left-right direction of first controller 1. Thus, in attachment of first controller 1 to accommodation portion 800, position alignment in the left-right direction in insertion of projection 100 in projection accommodation portion 850 is facilitated.

In removal of first controller 1 from apparatus 500, the user puts his/her finger over lower side surface 13 of controller housing 10 through a notch 561 (see Fig. 24) located in the lower portion of accommodation portion 800. Notch 561 is formed by cutting a central portion in the left-right direction of a lower wall that defines the accommodation portion. Therefore, a part of lower side surface 13 of first controller 1 accommodated in accommodation portion 800 is exposed downward through notch 561. In a procedure reverse to that in attachment, first controller 1 is rotated along a direction opposite to second arrow A2 generally around projection 100 such that the lower portion of first controller 1 is moved away from accommodation portion 800. In the present embodiment, with lower side surface 13 of first controller 1 serving as a point of effort and the vicinity of the lower end of flange inner surface 902 serving as a fulcrum, force in a direction away from pushing portions 522 and 542 is applied to buttons 110 and 120. Thereafter, first controller 1 is moved from accommodation portion 800 along a direction opposite to first arrow A1. First controller 1 is thus removed from apparatus 500. Since first controller 1 is thus removed while it rotates around the side of projection 100, buttons 110 and 120 are moved away from pushing portions 522 and 542 more readily than in an example where the first controller is removed, for example, by being pulled vertically downward. Therefore, first controller 1 can readily be removed as intended by the user. In the present embodiment, a distance from the lower end of flange inner surface 902 to notch 561 (or a cut portion in lower surface 802) is longer than a distance from the lower end of flange inner surface 902 to pushing portions 522 and 542 (or a length in the upward-downward direction of flange inner surface 902). Therefore, with leverage, the user can readily remove first controller 1. Notch 561 may be in a different shape or does not have to be provided.

Other features of accommodation portion 800 will now be described. As shown in Fig. 25, bottom surface 805 includes a first elastically deformable body 651. First elastically deformable body 651 is located in second bottom surface area 805b. First elastically deformable body 651 includes third rubber member 623 and fourth rubber member 624.

In accommodation of first controller 1 in accommodation portion 800 by the user, the lower portion of first controller 1 may be attracted toward bottom surface 805 of accommodation portion 800 around the upper portion of first controller 1 by attraction by magnetic member 610. At this time, first elastically deformable body 651 can suppress impact at the time of collision between the rear surface of first controller 1 and bottom surface 805.

First elastically deformable body 651 is located below the center in the upward-downward direction, at exposed bottom surface 805 when apparatus 500 is viewed from the front side. Since first controller 1 is rotated around an upper portion side, impact can be suppressed by positioning first elastically deformable body 651 at a radially outer side of the center. First elastically deformable body 651 may be located at the center in the upward-downward direction or above the center, at bottom surface 805.

Lower surface 802 is provided with a second elastically deformable body 652. Second elastically deformable body 652 includes first rubber member 621 and second rubber member 622.

Second elastically deformable body 652 supports first controller 1 from below, for example, when the stick of first controller 1 attached to apparatus 500 is tilted. For example, when the stick of first controller 1 is tilted downward, without support of first controller 1 from below, first controller 1 may move downward in accommodation portion 800 and a gap may be created between second movable portion 520 and fourth movable portion 540 and first button 110 and second button 120. When the user presses down first movable portion 510 and third movable portion 530 in the presence of such a gap, second movable portion 520 and fourth movable portion 540 may not sufficiently press down first button 110 and second button 120, respectively. As first controller 1 is supported from below by second elastically deformable body 652, for example, when an operation to tilt the stick downward is performed, such a situation that first button 110 or second button 120 is not sufficiently pressed down can be suppressed. Since second elastically deformable body 652 elastically deforms, resistance in attachment and removal of first controller 1 to and from the accommodation portion can be suppressed.

Upper surface 801, on the other hand, does not have to include the elastically deformable body. Therefore, feeling of attachment in attachment of controller 1 to apparatus 500 while button 110 is attracted by magnetic force can be improved.

In the present embodiment, in the left-right direction, each of third rubber member 623 and fourth rubber member 624 is located between first rubber member 621 and second rubber member 622. The elastically deformable body, on the other hand, is not located at upper surface 801. Therefore, feeling of attachment in attachment of controller 1 to apparatus 500 while button 110 is attracted by magnetic force can be improved.

Fig. 26 shows a cross-section of second bottom surface area 805b. Second bottom surface area 805b includes a first bottom surface portion 811, a second bottom surface portion 812, and a third bottom surface portion 813. Third bottom surface portion 813 is contiguous to each of first bottom surface portion 811 and second bottom surface portion 812. In the left-right direction, third bottom surface portion 813 is located between first bottom surface portion 811 and second bottom surface portion 812. Each of first bottom surface portion 811 and second bottom surface portion 812 is in a shape curved rearward. At least a part of operation lever 182 formed at rear surface 16 of first controller 1 is arranged in a space defined by first bottom surface portion 811. At least a part of an operation lever 282 formed at a rear surface 20 of second controller 2 is arranged in a space defined by second bottom surface portion 812. In the front-rear direction, third bottom surface portion 813 is located in front of each of first bottom surface portion 811 and second bottom surface portion 812.

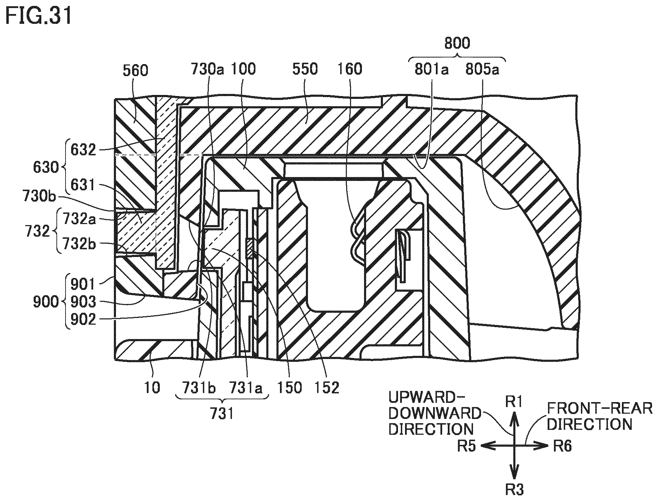

Fig. 31 is a schematic cross-sectional view showing a state in which the first controller has been attached to the apparatus according to the first embodiment. The cross-section shown in Fig. 31 is in parallel to each of the upward-downward direction and the front-rear direction.

Flange 900 includes a first light guide hole 731 and a second light guide hole 732 that communicate with each other. First light guide hole 731 is located at internal housing 550. First light guide hole 731 is open at flange inner surface 902 and defines an inlet 730a. Second light guide hole 732 is located at front-side housing 560. Second light guide hole 732 is open at flange outer surface 901 and defines an outlet 730b.

Inlet 730a is opposed to light emission portion 150 of first controller 1. Light emitted from projection 100 is incident through inlet 730a. Light incident through inlet 730a goes out through outlet 730b. First light guide hole 731 includes a first light guide hole upper end 731a and a first light guide hole lower end 731b. Second light guide hole 732 includes a second light guide hole upper end 732a and a second light guide hole lower end 732b.

Second light guide hole 732 is located above first light guide hole 731. Specifically, in the upward-downward direction, second light guide hole lower end 732b is located above first light guide hole lower end 731b. In the upward-downward direction, second light guide hole upper end 732a is located above first light guide hole upper end 731a. Thus, while a thickness in the upward-downward direction at the lower end of flange 900 is generally secured, light from projection 100 of controller 1 can be radiated to the outside. Therefore, while strength of flange 900 is secured, the user can visually recognize light.

Apparatus 500 includes light guide member 630. Light guide member 630 is mounted to internal housing 550. In the left-right direction, light guide member 630 is arranged at the center of internal housing 550. Light guide member 630 includes a guide main body portion 632 and a guide projection portion 631. Guide projection portion 631 projects from guide main body portion 632. Guide projection portion 631 is configured to be inserted in second light guide hole 732. Guide main body portion 632 is located between front-side housing 560 and internal housing 550. Though light guide member 630 is not inserted in first light guide hole 731, light guide member 630 may be inserted in first light guide hole 731. Though first light guide hole 731 and second light guide hole 732 are displaced from each other in the upward-downward direction, with light guide member 630, light emitted from a light emitting element 152 of first controller 1 is effectively emitted to the outside of apparatus 500 through outlet 730b.

A configuration for pressing down buttons 110 and 120 of first game controller 1 attached to apparatus 500, by an operation by the user, will now be described.

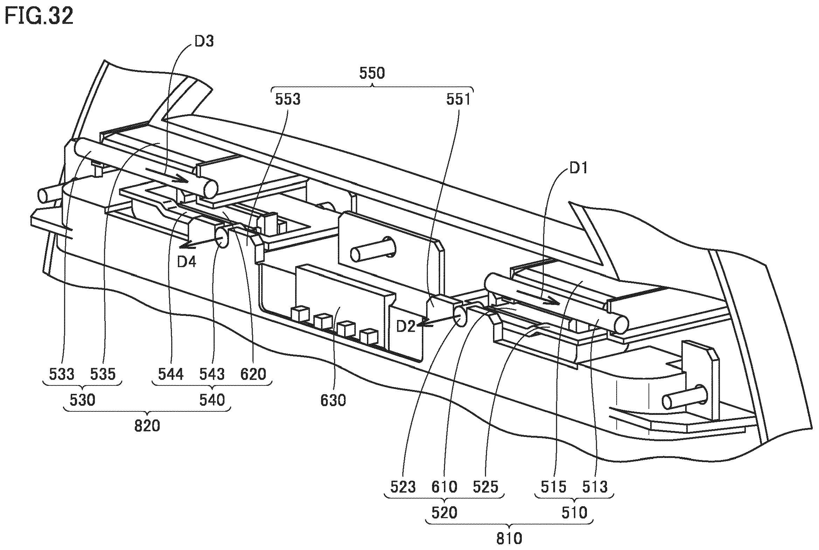

Fig. 32 is a schematic perspective view showing a configuration of a part of apparatus 500 according to the first embodiment. As shown in Fig. 32, apparatus 500 includes a first pushing component 810 and a second pushing component 820. First pushing component 810 includes first movable portion 510 and second movable portion 520. Second pushing component 820 includes third movable portion 530 and fourth movable portion 540. In the left-right direction, first pushing component 810 is located at the right of the center of internal housing 550. In the left-right direction, second pushing component 820 is located at the left of the center of internal housing 550. In the left-right direction, light guide member 630 is located between first pushing component 810 and second pushing component 820.

First axis 513 of first movable portion 510 extends in a first direction D1 including a left-right-direction component. First axis 513 may extend in a direction in parallel to the left-right direction or in a direction inclined with respect to the left-right direction. A right end of first axis 513 is located at the left of a right end of first surface 511 (see Fig. 22). Similarly, third axis 533 of third movable portion 530 extends in a third direction D3 including a left-right-direction component. Third axis 533 may extend in the direction in parallel to the left-right direction or in the direction inclined with respect to the left-right direction. A left end of third axis 533 is located at the right of a left end of third surface 531 (see Fig. 22).

Second axis 523 of second movable portion 520 extends in a second direction D2. Second direction D2 is a direction closer to the front-rear direction than first direction D1. Second direction D2 includes a front-rear-direction component. Second axis 523 may extend in a direction in parallel to the front-rear direction or a direction inclined with respect to the front-rear direction. Similarly, fourth axis 543 of fourth movable portion 540 extends in a fourth direction D4. Fourth direction D4 is a direction closer to the front-rear direction than third direction D3. Fourth direction D4 includes a front-rear-direction component. Fourth axis 543 may extend in the direction in parallel to the front-rear direction or the direction inclined with respect to the front-rear direction.

In the present embodiment, third direction D3 is the same as first direction D1. Fourth direction D4 is the same as second direction D2. When viewed in the upward-downward direction, first direction D1 and second direction D2 are orthogonal to each other. In another embodiment, third direction D3 may be different from first direction D1. Fourth direction D4 may be different from second direction D2. When viewed in the upward-downward direction, first direction D1 and second direction D2 do not have to be orthogonal to each other.

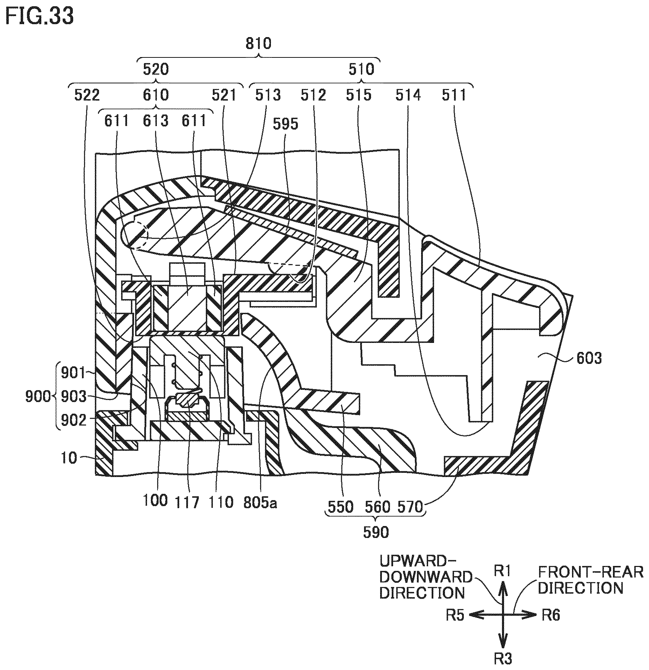

Fig. 33 is a first schematic cross-sectional view showing the configuration of apparatus 500 while first surface 511 is not pushed. The cross-section shown in Fig. 33 is in parallel to each of the front-rear direction and the upward-downward direction.

As shown in Fig. 33, projection 100 of first controller 1 is arranged at the rear of flange 900 of apparatus 500. In the front-rear direction, projection 100 is arranged between flange inner surface 902 and first bottom surface area 805a. In the upward-downward direction, controller housing 10 of first controller 1 is arranged below flange lower surface 903.

As shown in Fig. 33, first button 110 of first controller 1 is arranged at a position opposed to second movable portion 520 of apparatus 500. Similarly, second button 120 of first controller 1 is arranged at a position opposed to fourth movable portion 540 of apparatus 500.

First button 110 is configured to be attracted to second movable portion 520. Second movable portion 520 includes first magnetic member 610. First magnetic member 610 and first button 110 are attracted to each other by magnetic force. First button 110 comes in contact with second pushing portion 522 of second movable portion 520. Though second pushing portion 522 is flat in the present embodiment, it may be in a projecting shape or another shape. Second pushing portion 522 is comprised, for example, of resin. First magnetic member 610 is opposed to first button 110 while it is distant from first button 110. Second pushing portion 522 may be comprised, for example, of a magnetic material, or the entire second movable portion 520 may be comprised of a magnetic material. In the upward-downward direction, a direction in which second surface 521 of second movable portion 520 faces and a direction in which second pushing portion 522 faces are opposite to each other. In the upward-downward direction, second pushing portion 522 is located below second surface 521.

First movable portion 510 includes a movable main body portion 515, first surface 511, first pushing portion 512, first axis 513, and a first lower end portion 514. First surface 511 is a surface to be pushed by the user. First surface 511 is exposed to the outside of housing 590. First movable portion 510 is accommodated in housing 590 such that first surface 511 is exposed (see Fig. 18). First surface 511 is exposed to the outside through first movable portion arrangement hole 603 located in rear-side housing 570.

In the upward-downward direction, a direction in which first pushing portion 512 faces is opposite to the direction in which first surface 511 faces. First surface 511 is a part of an upper surface of movable main body portion 515 and first pushing portion 512 is a part of a lower surface of movable main body portion 515. First pushing portion 512 is, for example, in a shape curved convexly downward. First pushing portion 512 is in contact with second surface 521 of second movable portion 520. First lower end portion 514 is an end of a portion that projects downward from a surface opposite to first surface 511.

As shown in Fig. 33, in the front-rear direction, first surface 511 is located at the rear of first axis 513. In the front-rear direction, first pushing portion 512 is located between first axis 513 and first surface 511. In the front-rear direction, a rear end of second movable portion 520 is located in front of a rear end of first movable portion 510. In the front-rear direction, first axis 513 is located in front of the center in the front-rear direction of second movable portion 520. In the front-rear direction, first magnetic member 610 is located between first axis 513 and first pushing portion 512. Apparatus 500 includes a cushion 595. Cushion 595 is located between an inner surface of housing 590 and the upper surface of movable main body portion 515 of first movable portion 510. Cushion 595 and first pushing portion 512 are located on the same straight line in parallel to the upward-downward direction. Cushion 595 can suppress generation of noise caused by interference between first movable portion 510 and housing 590, for example, when first movable portion 510 is biased upward by repulsive force or the like from button 110 of controller 1 or when controller 1 includes an oscillator.

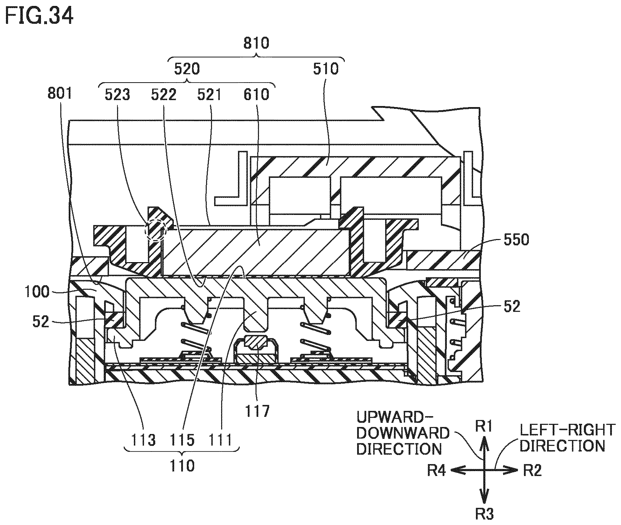

Fig. 34 is a second schematic cross-sectional view showing the configuration of apparatus 500 while first surface 511 is not pushed. The cross-section shown in Fig. 34 is in parallel to each of the left-right direction and the upward-downward direction. Fig. 34 is a schematic cross-sectional view when apparatus 500 is viewed from the front surface side, and hence shows a part of the right side in the left-right direction of apparatus 500. The left direction in Fig. 34 can also be defined as an inner side in the left-right direction of apparatus 500 and the right direction in Fig. 34 can also be defined as an outer side in the left-right direction of apparatus 500. When the left and the right are mentioned below, they are also referred to as the inner side and the outer side, respectively.

As shown in Fig. 34, in the upward-downward direction, second pushing portion 522 of second movable portion 520 is located below upper surface 801 of accommodation portion 800. Similarly, in the upward-downward direction, operation surface 115 of first button 110 is located below first upper surface area 801a of accommodation portion 800. Projection 100 of first controller 1 is distant from first upper surface area 801a of accommodation portion 800.

Magnetic member 610 is located above first button 110 of first controller 1 accommodated in accommodation portion 800. In the left-right direction, the center of magnetic member 610 is located at the inner side of the center of first button 110. In the present embodiment, magnetic member 610 is located from one side to the other side relative to the center of the button in the left-right direction. In the left-right direction, operation surface 115 of first button 110 is larger in width than magnetic member 610. In the left-right direction, operation surface 115 of first button 110 is larger in width than second pushing portion 522.

As shown in Fig. 34, in the left-right direction, second axis 523 is located at the inner side of the center of magnetic member 610. In the upward-downward direction, second axis 523 is located above second pushing portion 522.

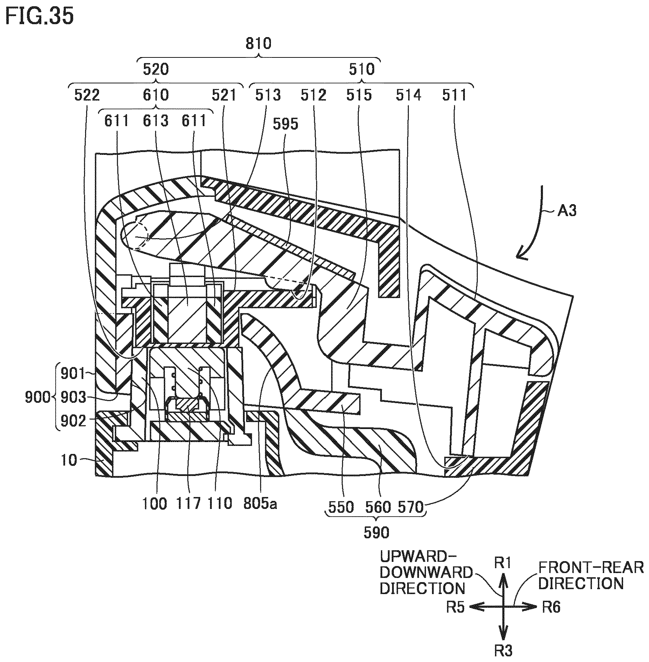

Fig. 35 is a first schematic cross-sectional view showing the configuration of apparatus 500 while first surface 511 has been pushed. An area shown in Fig. 35 corresponds to the area shown in Fig. 33.

As shown in Fig. 35, first surface 511 is pushed downward by the user. First movable portion 510 rotates around first axis 513 as first surface 511 is pushed. First movable portion 510 rotates in a direction along a direction shown with a third arrow A3. First pushing portion 512 of first movable portion 510 pushes down second surface 521 of second movable portion 520. As first lower end portion 514 of first movable portion 510 abuts on housing 590, rotation of first movable portion 510 stops. Though an angle of rotation of first movable portion 510 is not particularly limited, the angle may be, for example, not larger than 45°, not larger than 30°, or not larger than 20°.

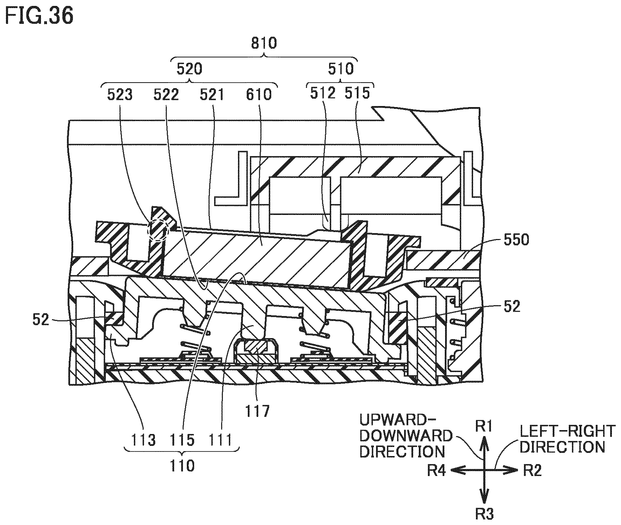

Fig. 36 is a second schematic cross-sectional view showing the configuration of apparatus 500 while first surface 511 has been pushed. An area shown in Fig. 36 corresponds to the area shown in Fig. 34.

As shown in Fig. 36, second movable portion 520 rotates around second axis 523 as second surface 521 is pushed by first pushing portion 512. As second movable portion 520 rotates, second pushing portion 522 is inclined with respect to the left-right direction. In the upward-downward direction, a height of a right end of second pushing portion 522 is lower than a height of a left end of second pushing portion 522. As second pushing portion 522 is inclined as being in contact with operation surface 115 of first button 110, operation surface 115 of first button 110 is also inclined. In the upward-downward direction, a height of a right end of operation surface 115 is lower than a height of a left end of operation surface 115. First button 110 as a whole is pushed down by second pushing portion 522. In other words, as second movable portion 520 rotates, second pushing portion 522 pushes first button 110 of first controller 1. Second movable portion 520 presses down one side relative to the center of first button 110 more than the other side. First protruding portion 111 of first button 110 that has been pushed down pushes tact switch 117.

As the user releases his/her hand from first surface 511, the upper portion of tact switch 117 returns to its original shape. First protruding portion 111 is thus pushed back upward. Therefore, first button 110 moves to an initial position. Second movable portion 520 thus rotates and second movable portion 520 moves to its original position. Second surface 521 of second movable portion 520 pushes up first pushing portion 512. First movable portion 510 thus rotates and first movable portion 510 moves to its original position.

Similarly, third movable portion 530 rotates around third axis 533 as the user pushes third surface 531. Fourth movable portion 540 rotates around fourth axis 543 as fourth surface 541 is pushed by third pushing portion 532. Fourth pushing portion 542 pushes second button 120 of first controller 1 as fourth movable portion 540 rotates.

Thus, in the present embodiment, as the user pushes first movable component 510 that rotates around first axis 513 that extends in the left-right direction and first movable component 510 pushes second movable component 520 that rotates around second axis 523 that extends in the front-rear direction, second movable component 520 pushes button 110.

In an apparatus held by the user, a movable portion including an operation surface that laterally extends may be provided to rotate around an axis that extends in a direction including a front-rear-direction component. Depending on a size of a hand of the user who holds the apparatus or a manner of holding, which part of the operation surface that laterally extends is to be pushed may be varied, and consequently force necessary for an operation or feeling of the operation may be varied. According to the configuration, first movable component 510 configured to be operated by the user rotates around first axis 513 that laterally extends. Therefore, even when a position pushed by the user is varied in the left-right direction, variation in force necessary for the operation or feeling of the operation can be suppressed. Second movable component 520 configured to be pushed by first movable component 510 rotates around second axis 523 that extends in the front-rear direction. Therefore, while a thickness in the front-rear direction of apparatus 500 is suppressed, a position of second axis 523 or a portion to be pushed by first pushing portion 512 of first movable component 510 can be adjusted and force to be applied by the user which is necessary for pressing down button 110 can be adjusted. Since a portion of second movable component 520 to be pushed by first pushing portion 512 of first movable component 510 is fixed, variation in force necessary for pushing button 110 or feeling of operation due to variation in position of pushing of first surface 511 of the first movable component by the user can be suppressed.

In the present embodiment, in the front-rear direction, first pushing portion 512 is located between first axis 513 and first pushed surface 511. At least a part of the second movable portion including second pushed surface 521 to be pushed by the first pushing portion is located at a position where it is superimposed on the first movable portion in the upward-downward direction. Therefore, the thickness in the front-rear direction of apparatus 500 can be made smaller.

Second movable portion 520 includes magnetic member 610. Since second movable portion 520 and button 110 are attracted to each other, for example, while button 110 is pushed or returns as a result of operation on first movable portion 510 by the user, operability is improved.

Second movable portion 520 presses down the other side relative to the center of button 110. Therefore, while inclination of the entire controller 1 is suppressed, second movable portion 520 can press down button 110.

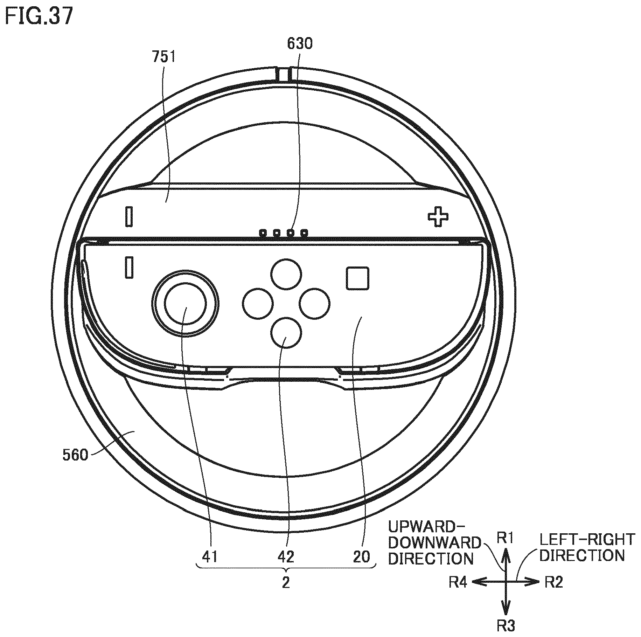

An example where first controller 1 is attached to apparatus 500 is described so far. Second controller 2 is also attachable to apparatus 500. Fig. 37 is a schematic front view showing a state in which the second controller has been attached to apparatus 500. As shown in Fig. 37, second controller 2 is attached to apparatus 500 such that the front surface of second controller 2 faces forward. One set of four buttons 42 and joystick 41 of second controller 2 face forward. One set of four buttons 42 and joystick 41 of second controller 2 are exposed at accommodation portion 800. The user can operate one set of four buttons 42 and joystick 41 of second controller 2. Positional relation of each portion with apparatus 500 in attachment of second controller 2 to apparatus 500 is substantially the same as the manner described in connection with first controller 1, although there is a difference, for example, in that the left and the right are opposite. Therefore, description will not be repeated. For example, third button 210 and fourth button 220 of second controller 2 accommodated in accommodation portion 800 are to be pressed down by second movable portion 520 and fourth movable portion 540, similarly to first button 110 and second button 120 of the first controller, respectively. In the horizontally held state, first controller 1 and second controller 2 are opposite in the left-right direction in positions of the operation lever at the rear surface and a raised portion at the rear surface around the former. In this regard, as described with reference to Fig. 26, the operation lever of one controller and at least a part of the raised portion around the former are arranged in one of a space defined by first bottom surface portion 811 and a space defined by second bottom surface portion 812, and corresponding portions of the other controller are arranged in the other of the spaces.

### (Second Embodiment)

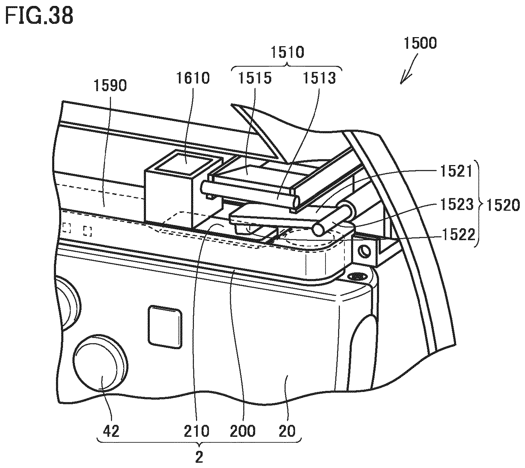

A configuration of an apparatus 1500 according to a second embodiment will now be described. Fig. 38 is a partial schematic perspective view showing a state in which the controller has been attached to apparatus 1500 according to the second embodiment. Though second controller 2 is attached to apparatus 1500 in Fig. 38, first controller 1 may be attached thereto. As shown in Fig. 38, apparatus 1500 according to the present embodiment includes a first movable portion 1510, a second movable portion 1520, and a magnetic member 1610. First movable portion 1510 includes a first axis 1513 and a movable main body portion 1515. First axis 1513 extends in the left-right direction. Second movable portion 1520 includes a second axis 1523, a second surface 1521, and a second pushing portion 1522. The second pushing portion and third button 210 are not attracted to each other by magnetic force. For example, second movable portion 1520 does not include a magnetic member. Second axis 1523 extends in the front-rear direction. In the left-right direction, second axis 1523 is located at the right of second surface 1521.

Third button 210 of second controller 2 and magnetic member 1610 are configured to be attracted to each other by magnetic force. Third button 210 is configured to be attracted to magnetic member 1610. Magnetic member 1610 is provided as being immovable with respect to the accommodation portion of apparatus 1500 where second controller 2 is to be accommodated. Magnetic member 1610 is fixed, for example, to a housing 1590. In the left-right direction, magnetic member 1610 is located at the left of first movable portion 1510. In the left-right direction, magnetic member 1610 is located at one side relative to the center of third button 210 and not located at the other side relative to the center of third button 210. In the left-right direction, magnetic member 1610 is located at the left of second movable portion 1520. In the left-right direction, second surface 1521 is located between magnetic member 1610 and second axis 1523.

In the present embodiment, as second movable portion 1520 is rotated by an operation by the user on first movable portion 1510, second pushing portion 1522 presses down one side relative to the center of third button 210. At this time, the other side of third button 210 relative to the center in the left-right direction has been attracted by magnetic member 1610. Therefore, third button 210 is pushed such that one side sinks with the other side relative to the center being defined as the axis. Since magnetic member 1610 is fixed, it does not follow a motion of third button 210.

### (Third Embodiment)

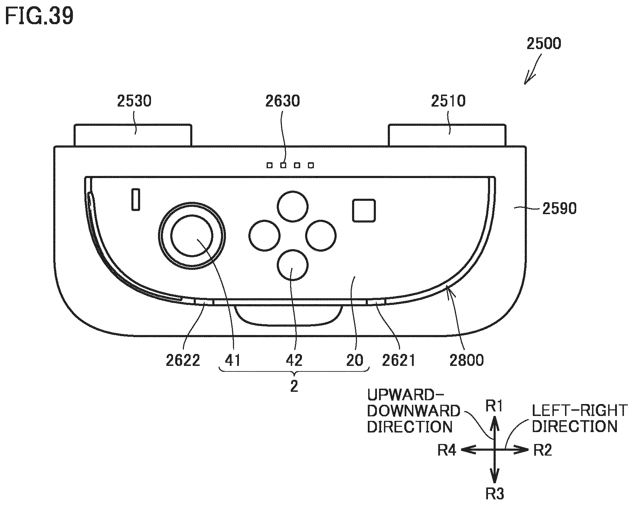

A configuration of an apparatus 2500 according to a third embodiment will now be described. Fig. 39 is a schematic front view showing a state in which the controller has been attached to apparatus 2500 according to the third embodiment. Though second controller 2 is attached to apparatus 2500 in Fig. 39, first controller 1 may be attached thereto.

As shown in Fig. 39, a housing 2590 of apparatus 2500 is provided with an accommodation portion 2800. Housing 2590 is in a laterally elongated shape. A maximum width of housing 2590 in the left-right direction is larger than a maximum width of housing 2590 in the upward-downward direction. Housing 2590 includes a flange, which is configured to cover at least a part of the front surface of the projection of second controller 2. First movable portion 2510 is located at the rear side of attached second controller 2 and rotates around an axis that extends in the left-right direction. A not-shown third movable portion pushed by first movable portion 2510 rotates around an axis that extends in the front-rear direction and presses down third button 210 of second controller 2.

### <Modification>

Though the attachment portion of the controller is provided as the projection is described above, the attachment portion of the controller is not limited to the projection. The attachment portion of the controller may be a slider attachment portion by way of example. The slider attachment portion is configured to be attached by slide with respect to a rail provided in the game device. The attachment portion may be a structure that projects from a side surface or another structure.

Though the game controller is illustrated as the controller above, the controller may be another controller including a button.

Though the controller is attached to the apparatus by accommodation of the controller in the accommodation portion above, an attachment structure may be another structure.

Though an example in which the controller is attached to the apparatus is described above, the apparatus may be configured such that it includes two movable portions configured to rotate around axes that face in different directions whereas the controller is not attached thereto. For example, the apparatus may be a controller configured to function alone, and may include a fifth movable portion configured to be operated by the user and to rotate around a first axis that extends in a first direction, a sixth movable portion configured to rotate around a second axis that extends in a second direction different from the first direction by being pushed by the fifth movable portion, and a contact configured to be pushed by the sixth movable portion.

Though an example in which the apparatus includes the flange is described above, the apparatus may be in such a structure that the flange is not provided and the controller is insertable in the accommodation portion, for example, in parallel from the front surface side. At this time, the apparatus may include a magnetic member configured to be attracted to the button of the controller by magnetic force, or it does not have to include the magnetic member.

The apparatus may include the first movable portion and the second movable portion and do not have to include the third movable portion and the fourth movable portion.

Though an example in which the buttons of the controller are configured to be pushed by the first to fourth movable portions is described above, a feature configured to push the button may be another feature. For example, one component itself configured to be pressed down by the user may be configured to press down the button of the controller attached to the apparatus. The one component is an exemplary pusher. Alternatively, at least a part of the upper surface that delimits the accommodation portion may be exposed and the user may directly press down the button of the controller attached to the apparatus.

The apparatus does not have to include a magnetic member configured to be attracted to the button of the controller by magnetic force. For example, the second movable portion does not have to include a magnet.

The apparatus does not have to include second elastically deformable body 652. For example, the apparatus may include a projecting portion that does not deform elastically like rubber. For example, a part of lower surface 802 may project upward. Alternatively, a part of the lower end of bottom surface 805 may project forward. Such a projecting portion may support the controller from below at the time when the controller is operated.

The apparatus may include a terminal. The terminal of the apparatus is electrically connected, for example, to the first terminal of controller 1. In that case, the apparatus may include a circuit. For example, the apparatus may include a processor. The apparatus may include a processor without including a terminal. For example, apparatus 500, 1500, or 2500 may include a processor and wirelessly communicate with the controller or the game device.

Though rim 591 has a circular outer geometry above, the rim does not have to be circular. For example, the rim may be in a shape of a rhombus or a ribbon. The outer geometry of the rim may be discontinuous in part. For example, the rim may be in such a shape as a circle discontinuous at an upper part. The shape of the rim cover is not limited to the shape shown in the embodiment. The apparatus does not have to include the rim cover.

Though an example in which apparatus 500 includes internal housing 550, front-side housing 560, and rear-side housing 570 is described above, the configuration of the housing or the shape of each housing is not limited. For example, the apparatus does not have to include internal housing 550.

Light emitted from the light emission portion of the controller attached to the apparatus may be cut off by the apparatus. For example, flange 900 does not have to include the inlet and the outlet.

Though the accommodation portion is defined at least by the bottom surface, the right surface, the left surface, and the lower surface above, the accommodation portion does not have to include at least one of them. The apparatus may include a front face that delimits the front side of the accommodation portion and is opposed to the entire front surface of the controller.

The apparatus does not have to include at least one of the components described in the embodiments or may include an additional component, or at least one of the components may be replaced with another component. By way of example, the apparatus does not have to include at least one of first elastically deformable body 651, second elastically deformable body 652, and cushion 595.

Input from the mouse operation sensor may be used while the controller is attached to the apparatus. As the apparatus is operated, a state of light reception by the mouse operation sensor may be varied.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

- 1: first controller, controller
- 2: second controller
- 3: game device
- 10, 20: controller housing
- 11, 211: upper side surface
- 12: right side surface
- 13: lower side surface
- 14: left side surface
- 15: front surface
- 16: rear surface
- 17: housing opening
- 19: projection flange
- 31, 41: joystick
- 32, 42: one set of four buttons
- 33(1): + button
- 33(2): home button
- 43(1): - button
- 43(2): capture button
- 50: synchronization button
- 51, 53: ground connection portion
- 52, 651: first elastically deformable body
- 54, 652: second elastically deformable body
- 61: front-surface-side housing
- 62: rear-surface-side housing
- 71, 73: first inner surface
- 72, 74: second inner surface
- 90: flexible printed circuit
- 100, 200: projection
- 101: first area
- 102: second area
- 103: third area
- 104: fourth area
- 105: fifth area
- 106: top surface
- 107: outer peripheral surface
- 110: first button, button
- 111, 121: first protruding portion
- 112, 122: second protruding portion
- 113, 123: flange portion
- 114, 124: main body portion
- 115, 125: operation surface
- 117, 127: tact switch
- 118, 128: sidewall
- 120: second button
- 130: shoulder button (right)
- 140: Z shoulder button (right)
- 150, 250: light emission portion
- 152: light emitting element
- 160: first terminal
- 167: terminal accommodation portion
- 170: first opening
- 174: mouse operation sensor
- 181: pushing member
- 182: operation lever
- 191: first cushion
- 192: second cushion
- 193: first engagement hole
- 194: second engagement hole
- 195: synchronization button opening
- 196: terminal opening
- 197: fifth opening
- 198: sixth opening
- 210: third button
- 220: fourth button
- 230: shoulder button (left)
- 240: Z shoulder button (left)
- 253: third cushion
- 254: fourth cushion
- 260: second terminal
- 270: mouse sensor opening
- 274: mouse operation sensor
- 282: operation portion
- 301: audio input and output terminal
- 302: upper terminal
- 303: lower terminal
- 304: storage medium slot
- 305: display
- 306: main body housing
- 307: power button
- 310, 320: game-device-side recess
- 311: base surface
- 313: main body right side surface
- 314: main body left side surface
- 315: main body front surface
- 316: main body upper side surface
- 317: main body lower side surface
- 330: first plug connector
- 331: main body first terminal
- 332: tongue-shaped body
- 333: connector support portion
- 334: shoulder screw
- 338: cover member
- 341: main body second terminal
- 401: first hole, hole
- 402: second hole
- 410: game-device-side magnetic element, game-device-side first magnetic element
- 420: game-device-side second magnetic element
- 500, 1500, 2500: apparatus
- 510, 1510, 2510: first movable portion
- 511, 1511: first surface
- 512, 1512: first pushing portion
- 513, 1513: first axis
- 514: first lower end portion
- 515, 1515: movable main body portion
- 520, 1520: second movable portion
- 521, 1521: second surface
- 522, 1522: second pushing portion
- 523, 1523: second axis
- 523a: first shaft member
- 523b: second shaft member
- 524: first magnetic member arrangement recess
- 530, 2530: third movable portion
- 531: third surface
- 532: third pushing portion
- 533: third axis
- 540: fourth movable portion
- 541: fourth surface
- 542: fourth pushing portion
- 543: fourth axis
- 543a: third shaft member
- 543b: fourth shaft member
- 544: second magnetic member arrangement recess
- 550: internal housing
- 551: first support plate
- 552: second support plate
- 553: third support plate
- 554: fourth support plate
- 555: second shaft member arrangement hole
- 556: fourth shaft member arrangement hole
- 557: internal housing main body portion
- 560: front-side housing
- 560a: first annular portion
- 560b: first bridging portion
- 561: finger insertion opening
- 570: rear-side housing
- 570a: second annular portion
- 570b: second bridging portion
- 580: rim cover
- 590, 1590, 2590: housing
- 591: rim
- 595: cushion
- 601: second movable portion arrangement hole
- 602: fourth movable portion arrangement hole
- 603: first movable portion arrangement hole
- 604: third movable portion arrangement hole
- 610, 1610: magnetic member, first magnetic member
- 611: yoke
- 613: magnet
- 620: second magnetic member
- 621, 2621: first rubber member
- 622, 2622: second rubber member
- 623: third rubber member
- 624: fourth rubber member
- 630, 2630: light guide member
- 631: guide projection portion
- 632: guide main body portion
- 701: first fastening screw
- 702: second fastening screw
- 710: third bridging portion
- 730a: inlet
- 730b: outlet
- 731: first light guide hole
- 731a: first light guide hole upper end
- 731b: first light guide hole lower end
- 732: second light guide hole
- 732a: second light guide hole upper end
- 732b: third light guide hole lower end
- 800, 2800: accommodation portion
- 801: upper surface
- 801a: first upper surface area
- 801b: second upper surface area
- 802: lower surface
- 803: right surface
- 803a: first right surface area
- 803b: second right surface area
- 804: left surface
- 804a: first left surface area
- 804b: second left surface area
- 805: bottom surface
- 805a: first bottom surface area
- 805b: second bottom surface area
- 810: first pushing component
- 811: first bottom surface portion
- 812: second bottom surface portion
- 813: third bottom surface portion
- 820: second pushing component
- 850: projection accommodation portion
- 900: flange
- 901: flange outer surface
- 902: flange inner surface
- 903: flange lower surface
- 1000: information device apparatus
- 3120: game-device-side inner peripheral surface
- 3121: game-device-side bottom surface
- A1: first arrow
- A2: second arrow
- A3: third arrow
- D1: first direction
- D2: second direction
- D3: third direction
- D4: fourth direction
- R1: upward direction
- R2: right direction
- R3: downward direction
- R4: left direction
- R5: forward direction
- R6: rearward direction
- T1: first height
- T2: second height
- T3: third height
- T4: fourth height
- T5: fifth height
- T6: sixth height
- T7: seventh height
- T8: eighth height
- T9: ninth height
- T10: tenth height
- T11: eleventh height
- W1: first length
- W2: second length
- W3: third length
- W4: fourth length
- W5: fifth length
- W6: sixth length
- W7: seventh length
- W8: eighth length

## Claims

1. An apparatus to which a controller is removably attachable, the controller comprising an attachment portion and a button, the attachment portion projecting from a side surface and configured to be attached to a game device, the button being located at the attachment portion, the apparatus comprising:
an accommodation portion configured to accommodate the controller, the accommodation portion being defined by an inner surface comprising at least an upper surface that faces downward, a lower surface that faces upward, and a bottom surface that faces forward, the accommodation portion being open forward;
a flange comprising a flange inner surface that extends downward from the upper surface and is opposed to the bottom surface, the flange being configured to cover at least a part of a front surface of the attachment portion of the controller accommodated in the accommodation portion;
a user-operable portion configured to be operated by a user; and
a pusher configured to project downward from the upper surface as the user-operable portion is operated and to press down the button of the controller accommodated in the accommodation portion.

2. The apparatus according to claim 1, comprising a magnetic member configured to be attracted to the button by magnetic force.

3. The apparatus according to claim 2, wherein
the magnetic member is located at a position above the button of the controller accommodated in the accommodation portion.

4. The apparatus according to claim 2 or 3, wherein
the pusher comprises the magnetic member.

5. The apparatus according to claim 3, wherein
in a left-right direction, the magnetic member is located at at least one side relative to a center of the button of the controller attached to the apparatus, and
the pusher is configured to press down the other side relative to the center of the button.

6. The apparatus according to claim 5, wherein
the pusher comprises the magnetic member and the pusher is configured to rotate around an axis provided at the one side in the left-right direction relative to the magnetic member.

7. The apparatus according to claim 6, wherein
in the left-right direction, the magnetic member is located from the one side to the other side relative to the center of the button.

8. The apparatus according to claim 5, wherein
in the left-right direction, the magnetic member is located immovably with respect to the accommodation portion at the at least one side relative to the center of the button of the controller attached to the apparatus, and not located at the other side.

9. The apparatus according to any of claims 2 to 8, wherein
at the bottom surface, a first elastically deformable body is located.

10. The apparatus according to claim 9, wherein
the first elastically deformable body is located below a center in an upward-downward direction, at the bottom surface exposed when the apparatus is viewed from a front side.

11. The apparatus according to any of claims 2 to 10, wherein
at the lower surface, a second elastically deformable body is located, and
at the upper surface, no elastically deformable body is located.

12. The apparatus according to any of claims 1 to 11, wherein
a length of the flange in a left-right direction is shorter than a length of a facing-forward opening of the accommodation portion in the left-right direction.

13. The apparatus according to any of claims 1 to 12, wherein
a length of the flange in a left-right direction is longer than a length of the attachment portion in the left-right direction and shorter than a length of the controller in the left-right direction.

14. The apparatus according to any of claims 1 to 13, comprising a rim, wherein
the accommodation portion is located at an inner diameter side of the rim, and
the user-operable portion is located at a rear of the rim.

15. The apparatus according to any of claims 1 to 13, being in a shape of a steering wheel and comprising a front-side housing and a rear-side housing fixed to the front-side housing from a rear, wherein
the front-side housing and the rear-side housing form a rim, and
the apparatus comprises a rim cover configured to cover the rim so as to cover an outer peripheral edge of the rim except for an upper end area.

16. The apparatus according to claim 14, comprising a front-side housing and a rear-side housing fixed at a rear of the front-side housing, wherein
the front-side housing and the rear-side housing form the rim, and
the apparatus comprises a rim cover configured to cover the rim except for an upper end area of the rim.

17. The apparatus according to any of claims 1 to 16, wherein
an area of the bottom surface opposed to the flange inner surface is in a shape curved convexly upward and rearward.

18. The apparatus according to any of claims 1 to 17, wherein
a distance between an area of the bottom surface opposed to the flange inner surface and the attachment portion increases toward below.

19. The apparatus according to any of claims 1 to 18, wherein
a distance between a lower end of an area of the bottom surface opposed to the flange inner surface and the attachment portion is longer than a distance between a lower end of the flange inner surface and the attachment portion.

20. The apparatus according to any of claims 1 to 19, wherein
the flange comprises an inlet and an outlet, the inlet being located at the flange inner surface, the inlet being configured such that light emitted from the attachment portion is incident through the inlet, the outlet being located at a flange outer surface, the outlet being configured such that light incident through the inlet goes out through the outlet, and
the outlet is located above the inlet.
